# EUROPÄISCHE PATENTSCHRIFT

(11) **EP 4 146 367 B1**
(45) Veröffentlichungstag und Bekanntmachung des Hinweises auf die Patenterteilung: **03.04.2024**
(21) Anmeldenummer: 21724224.7
(22) Anmeldetag: 03.05.2021
(51) Int. Cl.: B01D 29/66, C02F 1/00

(54) **AUTOMATISIERTER DURCHLASSTEST FÜR EINEN FILTERKORB**
AUTOMATED PASSAGE TEST FOR A FILTER BASKET
TEST DE PASSAGE AUTOMATISE POUR UN PANIER DE FILTRE

(30) Priorität: 06.05.2020 DE 102020112317
(43) Veröffentlichungstag der Anmeldung: 15.03.2023
(73) Patentinhaber: Vogelsang GmbH & Co. KG, 49632 Essen (DE)
(72) Erfinder: HEINRICHS, Martin, 49632 Essen (DE)
(74) Vertreter: Eisenführ Speiser
(86) Internationale Anmeldenummer: PCT/EP2021/061563
(87) Internationale Veröffentlichungsnummer: WO 2021/224179

(56) Entgegenhaltungen:
- CN-A- 110 790 452
- DE-U1-202013 102 318
- KR-A- 20110 001 354
- US-A1- 2010 163 495

## Beschreibung

Die Erfindung betrifft ein Verfahren und eine Vorrichtung zur automatisierten Reinigung eines Filterkorbs in einem Feststofftank eines Bioreaktors, welcher insbesondere zur Wiederaufbereitung von Abwasser aus Sanitär- und Toilettenanlagen eingesetzt werden kann, dazu gehören auch biologische Toiletten, nach dem Prinzip einer biologischen Kläranlage.

Herkömmliche Bioreaktoren verfügen über einen Feststofftank mit einem Filterkorb, in den Abwasser mit festen und flüssigen Bestandteilen eingeleitet wird. Der Filterkorb trennt die festen von den flüssigen Bestandteilen. Dafür weist der Filterkorb an den begrenzenden Wänden, wie Boden- und Seitenwänden, Filterelemente auf, durch welche flüssige Elemente abfließen können und durch welche feste Elemente aufgefangen werden. Die festen Elemente sammeln sich am Boden innerhalb des Filterkorbs separiert von den flüssigen Elementen und bilden einen Filterkuchen. Die flüssigen Elemente fließen durch die Filterelemente hindurch in den Feststofftank und von dort in einen Flüssigtank, der in Fluidverbindung mit dem Feststofftank steht.

Es ist bekannt, dass sich die festen Elemente in dem Filterkorb als Filterkuchen absetzen. Zuerst bildet sich ein Filterkuchen beginnend an einer Bodenseite des Filterkorbs und anschließend an den Seiten des Filterkorbs. Dadurch wird das Wasser durch den Filterkuchen gehemmt in den Feststofftank abzufließen. Ein Filterkuchen mit gewisser Durchlässigkeit führt zu einem effizienten Filtervorgang. Jedoch kann ein zunehmend dicker und undurchlässiger werdender Filterkuchen dazu führen, dass der Filterkorb verstopft. Dies führt zu einem ineffizienten Filterverfahren, da die Flüssigkeit kaum mehr durch den Filter gelangt. Es ist daher notwendig, den Filterkorb in regelmäßigen Abständen von Feststoffen zu reinigen, um einen ausreichenden Abfluss des Wassers in den Feststofftank zu gewährleisten.

CN 110 790 452 A beschreibt ein Abwasser-Reinigungssystem mit einem Filter, einer Puffervorrichtung, einer Reinigungsvorrichtung und einem Erinnerungssystem, wobei das Erinnerungssystem genutzt wird, um daran zu erinnern, den Filter zu reinigen. KR 2011 0001354 A, US 2010/163495 A1 und DE 20 2013 102318 U1 beschreiben andere Reinigungssysteme.

Es ist bekannt, den Filterkuchen zu entfernen, um diesem Verstopfen zu begegnen. Oftmals wird hierbei der Filterkuchen entfernt, sobald erste Effekte einer Verstopfung auftreten. Dies hat allerdings den Nachteil, dass bereits eine ineffiziente Filterung stattgefunden hat. Es ist auch bekannt, von Zeit zu Zeit die Menge des Filterkuchens zu überprüfen, um daran festzustellen, ob eine Entfernung notwendig ist. Dies hat allerdings den Nachteil, dass die Überprüfung zufällig erfolgt, und der richtige Zeitpunkt, also weder zu früh noch zu spät, für eine Entfernung des Filterkuchens so nicht zuverlässig getroffen werden kann. Zudem ist eine Beurteilung, ob der Filterkuchen bereits so undurchlässig ist, dass er entfernt werden muss, nicht zuverlässig möglich.

Ein Problem bei solchen Reinigungsvorgängen liegt jedoch darin, dass Bioreaktoranlagen in der Regel als geschlossenes System aufgebaut sind und daher eine Ermittlung des Verschmutzungsgrades und der Ursache für eine unzureichende Filterung nur sehr aufwendig möglich ist. Gerade schon bestehende Bioreaktoren verfügen häufig nicht über Schnittstellen, mittels derer für die Bestimmung einer Fehlerursache oder eines Verschmutzungsgrades notwendige Informationen oder auch nur dafür hilfreiche Daten ausgelesen werden können. Dies ist insbesondere dann zusätzlich erschwert, wenn ein solcher Bioreaktor an Bord eines Fahrzeugs, wie beispielsweise eines gleisgebundenen Waggons, eingebaut ist, um das dort anfallende Schmutzwasser zu reinigen. In solchen Anwendungsfällen ist eine Wartung und Sicherstellung der Funktion des Bioreaktors häufig dezentral und ohne dessen Ausbau gewünscht, zugleich aber aufgrund der notwendigen Kompaktheit der Zugang zum Bioreaktor und zu Daten, die dessen Zustand beschreiben, nicht oder nur sehr aufwendig möglich.

Es ist daher eine Aufgabe der Erfindung ein Verfahren und eine Vorrichtung bereitzustellen, welche es erlauben, die Funktionsfähigkeit von Bioreaktoren auch ohne Zugang zu internen Daten und Informationen des Bioreaktors in besserer Weise und einfacher aufrechtzuerhalten.

Diese Aufgabe wird gelöst durch ein Verfahren zur automatisierten Reinigung eines Filterkorbs in einem Bioreaktor, wobei der Filterkorb auslassseitig in Fluidverbindung mit einem Flüssigkeitstank steht, und wobei der Filterkorb bodenseitig und seitlich durch filternde Wände begrenzt wird. Das Verfahren umfasst einen Schritt zur Bestimmung einer Durchlässigkeit des Filterkorbs. Dieser Schritt umfasst ein Ansteuern einer Absaugeinheit mittels einer elektronischen Steuerungseinheit zum Absaugen einer Restflüssigkeit aus dem Flüssigkeitstank durch eine Abflussleitung, hierauffolgendes Ansteuern einer Flüssigkeitsdosiereinheit mittels der elektronischen Steuerungseinheit zum Ausgeben einer Flüssigkeit mit einem vorbestimmten Flüssigkeitsvolumen in den Filterkorb durch eine Spülleitung, und Beenden der Ausgabe der Flüssigkeit zu einem Filterstartzeitpunkt. Weiterhin umfasst die Bestimmung der Durchlässigkeit ein Ansteuern, nach Ablauf einer Dauer eines vorbestimmten Filterzeitintervalls, welches ab dem Filterstartzeitpunkt beginnt, der Absaugeinheit mittels der Steuerungseinheit zum Entleeren des Flüssigkeitstanks mittels Absaugen eines gefilterten Flüssigkeitsvolumens aus dem Flüssigkeitstank durch die Abflussleitung, ein Messen des Volumens des im vorherigen Schritt abgesaugten gefilterten Flüssigkeitsvolumens der gefilterten Flüssigkeit in einer Messeinheit und ein Senden eines ein erstes Messergebnis repräsentierendes erstes Messsignal von der Messeinheit an die Steuerungseinheit. Die Steuereinheit bildet dann einen ersten Durchlässigkeitsquotienten aus dem Volumen des abgesaugten gefilterten Flüssigkeitsvolumens zu dem Volumen des zu Beginn ausgegebenen vorbestimmten Flüssigkeitsvolumens und vergleicht den ersten Durchlässigkeitsquotienten mit einem ersten vorbestimmten Durchlässigkeitsgrenzwert. Falls der Durchlässigkeitsquotient den ersten Durchlässigkeitsgrenzwert unterschreitet wird eine Reinigungseinheit zur Durchführung eines Reinigungsprozesses des Filterkorbs angesteuert, vorzugsweise mittels der Steuerungseinheit.

Diesem Verfahren liegt die Erkenntnis der Erfinder zugrunde, dass die Effizienz des Filtervorgangs erhöht werden kann, indem die Durchlässigkeit des Filterkorbs mittels der Durchlässigkeit insbesondere der Bodenseite des Filterkorbs in einem automatisierten Prozess bestimmt wird. Dies ermöglicht es, in Abhängigkeit eines Verhältnisses eines Durchlässigkeitsquotienten zu einem Durchlässigkeitsgrenzwert einen Reinigungsprozess durchzuführen. Hierdurch kann vermieden werden, dass nur unzureichend gereinigt wird und sich ein Filterkuchen zu schnell wieder aufbaut. In der Praxis soll sich das Verfahren an eine erste, beispielsweise turnusmäßige, Reinigung anschließen und so den Erfolg der ersten Reinigung prüfen können. Wird beispielswiese festgestellt, dass die erste dem Ermitteln der Durchlässigkeit vorangegangene Reinigung bereits ausreichend war, wird die Reinigungseinheit zur Durchführung des Reinigungsprozesses nicht mehr angesteuert.

Durch die Anwendung solch eines Verfahrens kann die Durchlässigkeit des Filterkorbes schnell und zuverlässig bestimmt werden und daraufhin gegebenenfalls eine bedarfsgerechte Reinigung des Filterkorbs durchgeführt werden. Insbesondere bedeutet ein solches Verfahren einen erheblich reduzierten Aufwand bei reduzierten Personalbedarf. Weiterhin kann die Genauigkeit der Bestimmung der Durchlässigkeit des Filterkorbs durch Ausklammern menschlicher Fehlerquellen erheblich verbessert werden.

Das Verfahren wird in einer Variante mit einer mobilen oder stationären Durchlasstestvorrichtung durchgeführt, die an entsprechende Anschlüsse des Bioreaktors angeschlossen werden kann. Die Durchlasstestvorrichtung ist vorzugsweise Teil einer Bioreaktorreinigungsanlage, die ebenfalls mobil oder stationär sein kann. Eine mobile Bioreaktorreinigungsanlage ist vorzugsweise auf einem Servicewagen angeordnet, der Bioreaktoren zum Reinigen anfährt. Ein praktisches Beispiel ist ein Bahnhof, an dem mehrere Züge ankommen, die Bioreaktoren aufweisen. Der Servicewagen kann dann von Zug zu Zug fahren, um die jeweiligen Bioreaktoren zu reinigen. Stationäre Bioreaktorreinigungsanlagen sind hingegen stationär beispielsweise in einer Servicestation eingebaut. Solche stationären Bioreaktorreinigungsanlagen können an Bahnhöfen oder Servicestellen eingerichtet sein. In der Regel sind solche stationären Bioreaktorreinigungsanlagen in der Lage, eine Mehrzahl an Bioreaktoren gleichzeitig zu reinigen.

In anderen Ausführungsformen kann die Durchlasstestvorrichtung aber auch insbesondere bei größeren Bioreaktoren fest vorzugsweise benachbart zu dem Bioreaktor verbaut und permanent an den Bioreaktor angeschlossen sein. Beide Varianten haben je nach weiteren Rahmenbedingungen ihre Vorteile.

Die Durchlasstestvorrichtung umfasst vorzugsweise die Steuerungseinheit, die Absaugeinheit, die Flüssigkeitsdosiereinheit und die Messeinheit, die aber nicht zwingend ausschließlich der Durchlasstestvorrichtung zugeordnet sein müssen. Einzelne Elemente können auch teilweise anderen Einheiten innerhalb einer Bioreaktorreinigungsanlage zugeordnet sein.

Die Reinigungseinheit, die ebenfalls Teil der Bioreaktorreinigungsanlage ist und teilweise oder vollständig der Durchlasstestvorrichtung zugeordnet sein kann, nutzt vorzugsweise eine fest in dem Bioreaktor verbaute Düse oder ähnliches, um einerseits mechanisch den Filterkorb abreinigen zu können, andererseits auch eine Zuführung für chemische Substanzen, wie etwas Säure, zu erlauben um chemisch Verschmutzungen oder Verkalkungen abreinigen zu können. Beispielsweise hat die Reinigungseinheit einen Hochdruckausgang, der an einen Anschluss der Düse angeschlossen werden kann, um der Düse eine Reinigungsflüssigkeit (Wasser oder eine chemisch wirksame Substanz) unter Druck zuzuführen. Die Düse ist vorzugsweise eine Vollstrahldüse, vorzugsweise eine rotierende, um Verschmutzung des Filterkorbes abfräsen zu können. Die Reinigungseinheit weist vorzugsweise eine Hochdruckquelle auf, um die Reinigungsflüssigkeit mit Hochdruck der Düse zuführen zu können. Die Reinigungseinheit ist nicht notwendigerweise mit der Steuerungseinheit verbunden. Es reicht auch aus, wenn die Steuerungseinheit das Ergebnis des Vergleichs des ersten Durchlässigkeitsquotienten mit dem vorbestimmten Durchlässigkeitsgrenzwert bereitstellt und dann beispielsweise eine weitere Reinigungs-Steuereinheit die Reinigungseinheit ansteuert oder auch ein Bediener das Ergebnis des Vergleichs beispielsweise von einem Display abliest und die Reinigungseinheit entsprechend steuert, beispielsweise durch Betätigen eines Hahns, um die Reinigungsflüssigkeit mit Hochdruck der Düse zuzuführen. Bevorzugt steuert aber die Steuerungseinheit die Reinigungseinheit an, da so ein höherer Automatisierungsgrad erzielt werden kann. Der Reinigungsprozess kann dann automatisiert in Abhängigkeit des Vergleichs durchgeführt werden.

Die Steuerungseinheit steht in einer elektronischen Signalverbindung mit der Absaugeinheit, der Flüssigkeitsdosiereinheit, der Messeinheit und vorzugsweise der Reinigungseinheit. Die Steuerungseinheit ist dafür ausgelegt, die jeweiligen Einheiten über elektronische Signale anzusteuern und Daten in beiden Richtungen mit den jeweiligen Einheiten auszutauschen. Beispiele für eine derartige Steuereinheit können ein Mikro-Controller, ein Computer oder ein Tablet sein. Die Steuerungseinheit ist vorzugsweise eine zentrale Steuerungseinheit einer Bioreaktorreinigungsanlage und dazu eingerichtet die Bioreaktorreinigungsanlage zu steuern.

Der erste Durchlässigkeitsgrenzwert ist vorzugsweise in der Steuerungseinheit vorgespeichert. Er kann auf Erfahrungswerten basieren, oder von einem Bediener vorgegeben sein. Ebenso kann er werksseitig vorgegeben sein, oder in Abhängigkeit des Bioreaktors und insbesondere in Abhängigkeit der Gestaltung des Filterkorbes gewählt werden.

Eine Flüssigkeitsdosiereinheit kann beispielsweise einen Messzylinder mit elektronisch ansteuerbaren Ventilen umfassen, über welchen mittels eines Überdrucks eine Flüssigkeit über eine Fluidverbindung, wie Schläuche oder Rohre, in den Feststofftank geleitet werden kann. Eine Messeinheit kann beispielsweise einen elektronisch ansteuerbaren Messzylinder umfassen, der ausgelegt ist, eine Füllhöhe einer Flüssigkeit in dem Messzylinder zu messen. Hierzu kann beispielsweise ein entsprechender Füllstandssensor in dem Messzylinder vorgesehen sein. Eine Absaugeinheit kann beispielsweise ein unter Unterdruck stehendes Rohr- oder Schlauchsystem mit elektronisch ansteuerbaren Ventilen umfassen, welches in direkter Fluidverbindung zu der Abflussleitung steht. Weiterhin kann das Rohr- und Schlauchsystem der Absaugeinheit über die Messeinheit mit der Abflussleitung in Fluidverbindung stehen. Ein Unterdruck kann beispielweise durch ein Pumpensystem erzeugt werden, welches in Verbindung zu der Absaugeinheit steht. Bevorzugt ist die Absaugeinheit an die Abflussleitung selektiv und bedarfsweise ankuppelbar, beispielsweise über eine Kamlok-Kupplung.

Auch wenn die Absaugeinheit, die Flüssigkeitsdosiereinheit und die Messeinheit als verschiedene Einheiten bezeichnet sind, ist es nicht erforderlich, dass sie separate bauliche Einheiten bilden. Vielmehr ist bevorzugt, dass sie in eine Durchflusstestvorrichtung und/oder Bioreaktorreinigungsanlage integriert sind und teilweise gemeinsame Komponenten umfassen und nutzen. Beispielsweise kann eine Pumpe vorgesehen sein, die sowohl Teil der Absaugeinheit als auch der Flüssigkeitsdosiereinheit sein kann. Die Begriffe Absaugeinheit, Flüssigkeitsdosiereinheit, Messeinheit und Reinigungseinheit sind daher funktional zu verstehen.

Gemäß einer bevorzugten Ausführungsvariante ist das Verfahren dadurch gekennzeichnet, dass nach Abschluss des (ersten) Reinigungsprozesses eine zweite Bestimmung einer Durchlässigkeit des Filterkorbs durchgeführt wird. Hierdurch soll geprüft werden, ob der Filterkorb nun ausreichend gereinigt ist. Diese zweite Bestimmung der Durchlässigkeit wird vorzugsweise ähnlich oder identisch zur vorherigen (ersten) Bestimmung der Durchlässigkeit durchgeführt. Sie umfasst vorzugsweise einen Schritt zum Ansteuern der Absaugeinheit mittels der elektronischen Steuerungseinheit zum Absaugen einer Restflüssigkeit aus dem Flüssigkeitstank durch die Abflussleitung, ein Ansteuern der Flüssigkeitsdosiereinheit mittels der elektronischen Steuerungseinheit zum Ausgeben einer Flüssigkeit mit einem vorbestimmten Flüssigkeitsvolumen in den Filterkorb durch die Spülleitung, und ein Beenden der Ausgabe der Flüssigkeit zu einem Filterstartzeitpunkt. Weiterhin umfasst die zweite Bestimmung der Durchlässigkeit ein Ansteuern, nach Ablauf einer Dauer eines vorbestimmten Filterzeitintervalls, welches ab dem Filterstartzeitpunkt beginnt, der Absaugeinheit mittels der Steuerungseinheit zum Entleeren des Flüssigkeitstanks mittels Absaugen eines gefilterten Flüssigkeitsvolumens aus dem Flüssigkeitstank durch die Abflussleitung, ein Messen des Volumens des in dem vorherigen Schritt abgesaugten gefilterten Flüssigkeitsvolumens der gefilterten Flüssigkeit in einer Messeinheit und ein Senden eines ein zweite Messergebnis repräsentierendes zweite Messsignal von der Messeinheit an die Steuerungseinheit. Die Steuerungseinheit bildet dann einen zweiten Durchlässigkeitsquotienten aus dem Volumen des im vorherigen Schritt abgesaugten gefilterten Flüssigkeitsvolumen zu dem Volumen des zu Beginn der zweiten Bestimmung der Durchlässigkeit ausgegebenen vorbestimmten Flüssigkeitsvolumen, und vergleicht diesen zweiten Durchlässigkeitsquotienten mit einem zweiten vorbestimmten Durchlässigkeitsgrenzwert, wobei der zweite Durchlässigkeitsgrenzwert vorzugsweise dem ersten vorbestimmten Durchlässigkeitsgrenzwert entspricht, oder größer als der erste vorbestimmte Durchlässigkeitsgrenzwert ist. Das Verfahren umfasst vorzugsweise weiterhin ein Ansteuern der Reinigungseinheit vorzugsweise mittels der Steuerungseinheit zur Durchführung eines Reinigungsprozesses des Filterkorbs, falls der zuvor gebildete zweite Durchlässigkeitsquotient den zweiten Durchlässigkeitsgrenzwert unterschreitet.

Gemäß einer weiteren bevorzugten Ausführungsvariante wird die Reinigungseinheit dazu veranlasst, einen mechanischen Reinigungsprozess durchzuführen, falls der erste Durchlässigkeitsquotient einen ersten Reinigungsgrenzwert, der niedriger ist als der erste Durchlässigkeitsgrenzwert, unterschreitet. Vorzugsweise wird die Reinigungseinheit dazu veranlasst, einen chemischen Reinigungsprozess durchzuführen, falls der erste Durchlässigkeitsquotient den ersten Reinigungsgrenzwert überschreitet, jedoch niedriger ist als der erste Durchlässigkeitsgrenzwert. Das Veranlassen der Reinigungseinheit wird vorzugsweise mittels der Steuerungseinheit ausgeführt. Ein mechanischer Reinigungsprozess umfasst vorzugsweise das Einbringen der Reinigungsflüssigkeit, die in diesem Fall Wasser sein kann, unter hohem Druck. Hierdurch kann ein sich am Boden des Filterkorbs gebildeter Filterkuchen abgefräst werden. Ein chemischer Reinigungsprozess umfasst vorzugsweise das ein Einbringen einer chemischen Substanz, vorzugsweise Säure. Dies wird vorzugsweise nicht mit Hochdruck ausgeführt, sondern mit nur geringem Druck. Zudem wird bei dem chemischen Reinigungsprozess eine Einwirkzeit vorgesehen, um etwaige chemische Prozesse ablaufen lassen zu können.

Gemäß dieser Ausführungsvariante kann der effektivste Reinigungsprozess zur Reinigung des Filterkorbes angewandt werden. Ein mechanischer Reinigungsprozess befreit den Filterkorb vor allem von groben Verunreinigungen, wie dem Filterkuchen. Eine chemische Reinigung befreit den Filterkorb vor allem von feineren Verunreinigungen, wie etwa einer Verkalkung. Bei einer sehr geringen Durchlässigkeit ist davon auszugehen, dass der Filterkorb grob verunreinigt ist, wogegen eine mechanische Reinigung effektiver ist. Bei einer weniger geringen Durchlässigkeit ist eine chemische Reinigung effektiver, um beispielweise eine Verkalkung von den Filterplatten zu entfernen.

Gemäß einer weiteren bevorzugten Ausführungsvariante wird die Reinigungseinheit dazu veranlasst, einen mechanischen zweiten Reinigungsprozess durchzuführen, falls der zweite Durchlässigkeitsquotient einen zweiten Reinigungsgrenzwert, der kleiner ist als der zweite Durchlässigkeitsgrenzwert und größer ist als der erste Reinigungsgrenzwert, unterschreitet. Vorzugsweise wird die Reinigungseinheit dazu veranlasst, einen chemischen zweiten Reinigungsprozess durchzuführen, falls der zweite Durchlässigkeitsquotient den zweiten Reinigungsgrenzwert überschreitet, jedoch niedriger ist als der zweite Durchlässigkeitsgrenzwert. Das Veranlassen der Reinigungseinheit wird vorzugsweise mittels der Steuerungseinheit ausgeführt.

Gemäß dieser Ausführungsvariant wird die effektivste Reinigungsmethode, mechanisch oder chemisch, für den zweiten Reinigungsprozess des Filterkorbes angewandt. Wie zuvor beschrieben kann dadurch die optimale Reinigungsmethode für eine Art der Verschmutzung angewandt werden.

Es soll verstanden werden, dass sich auch dritte, vierte, und weitere Reinigungsprozesse an den zweiten Reinigungsprozess anschließen können. Diese weisen dann vorzugsweise dieselben Verfahrensschritte auf wie der zweite Reinigungsprozess, mit der Maßgabe, dass jeweils weitere Werte und Quotienten ermittelt und verwendet werden.

Es ist auch bevorzugt, weitere Sensoren vorzusehen und zu verwenden. Beispielsweise weist die Durchflusstestvorrichtung einen Trübungssensor und/oder einen Leitfähigkeitssensor auf. Diese sind vorzugsweise stromabwärts der Abflussleitung oder in dieser angeordnet, um die abgesaugte Flüssigkeit zu messen. Solche Sensoren sind vorzugsweise mit der Steuerungseinheit verbunden, um entsprechende Signale an diesen bereitzustellen. Vorzugsweise stellt der Trübungssensor ein Trübungssignal bereit, das eine Trübung der Flüssigkeit repräsentiert. Vorzugsweise stellt der Leitfähigkeitssensor ein Leitfähigkeitssignal bereit, das eine Leitfähigkeit der Flüssigkeit repräsentiert. Eine hohe Trübung ist ein Indiz für eine hohe Beladung der Flüssigkeit mit Schwebestoffen und damit ein Indiz für eine hohe Verschmutzung. Beispielsweise tritt eine hohe Trübung auch nach einem mechanischen Reinigungsprozess auf, sodass dann vorzugsweise eine Spülung des Bioreaktors durchgeführt wird, bis eine gewünschte Trübung erreicht wird. Ebenso spricht eine höhere Leitfähigkeit für eine Beladung der Flüssigkeit mit ionenbildemden Material.

Gemäß einer weiteren bevorzugten Ausführungsvariante ist das ausgegebene vorbestimmte Flüssigkeitsvolumen nach dem Produkt einer Fläche der Bodenseite des Filterkorbs und einer Füllhöhe von 0,25 cm bis 2,5 cm, vorzugsweise 0,25 cm bis 1,0 cm, besonders bevorzugt 0,5 cm in dem Filterkorb bemessen. Dem liegt die Erkenntnis der Erfinder zugrunde, dass aufgrund der Schwerkraft die Bodenseite des Filterkorbes am stärksten verschmutzt wird und die Durchlässigkeit der Bodenseite des Filterkorbs als repräsentativ für die Durchlässigkeit des Filterkorbes angenommen werden kann. Daher ist es vorteilhaft, wenn sich ein möglichst dünner Film der ausgegebenen Flüssigkeit, wie etwa mit einer Füllhöhe von 0,5 cm, über die Bodenseite des Filterkorbes ausbreitet, da so ein Abfließen der ausgegebenen Flüssigkeit über die Seitenwände verhindert wird und die Bestimmung der Durchlässigkeit des Filterkorbes nicht verfälsch wird. Die Füllhöhe kann ebenfalls jeden Wert unterhalb von ca. 1 cm annehmen, wie etwa 0,1, 0,2, 0,3, 0,4, 0,6, 0,7, 0,8, 0,9, 1 cm. Zudem lässt sich so die Zeitdauer des Durchflusstests reduzieren.

In einer bevorzugten Weiterbildung wird die Flüssigkeitsdosiereinheit so mittels der elektronischen Steuerungseinheit angesteuert, dass das Ausgeben der Flüssigkeit mit dem vorbestimmten Flüssigkeitsvolumen mit einer Ausgaberate von 5 Liter pro Minute oder weniger, vorzugsweise 2,5 Liter pro Minute oder weniger erfolgt. Die Ausgaberate sollte an das Gesamtvolumen des Filterkorbes und insbesondere der Grundfläche des Bodens des Filterkorbes angepasst sein. Vorzugsweise wird die Abgaberate so gewählt, dass die zugegebene Flüssigkeit durch den Boden des Filterkorbes und nicht durch die Seitenwände fließt. Insbesondere soll kein Wasserschwall eingegeben werden, der das Messergebnis verfälschen könnte.

Vorzugsweise wird die Flüssigkeitsdosiereinheit bei der zweiten Bestimmung der Durchlässigkeit so mittels der elektronischen Steuerungseinheit angesteuert, dass das Ausgeben der Flüssigkeit mit dem vorbestimmten Flüssigkeitsvolumen mit einer Ausgaberate erfolgt, die den Quotienten aus dem in der ersten Bestimmung der Durchlässigkeit gemessenen Volumen zu dem vorbestimmten Filterzeitintervall gemäß der ersten Bestimmung der Durchlässigkeit nicht überschreitet. Einheiten sollen hierbei ignoriert werden.

Weiterhin wird vorzugsweise vor den jeweiligen Schritten, in denen die Flüssigkeitsdosiereinheit mittels der elektronischen Steuereinheit zum Ausgeben einer Flüssigkeit mit einem vorbestimmten Flüssigkeitsvolumen in den Filterkorb angesteuert wird, die jeweilige Spülleitung zunächst vollständig mit Flüssigkeit gefüllt. Grund hierfür ist, dass die Spülleitung je nach Ausführungsform verschiedene Längen aufweisen kann. Ist beispielsweise der Bioreaktor in einem schienengebundenen Fahrzeug untergebracht, kann die Länge der Spülleitung je nach Einbaulage variieren. Ist die Zuführleitung einmal komplett gefüllt, bilden sich an oberen Sattelpunkten Luftblasen bzw. das Wasser fließt immer dort ab, wo es Gefälle gibt. Wird nun auf die vollständig gefüllte Spülleitung ein zusätzliches Volumen gegeben, wird genau dieses Volumen auch in den Filterkorb ausgegeben. Hierdurch kann also sichergestellt werden, dass nicht ein Großteil der Flüssigkeit einfach in dem Schlauchsystem "verschwindet", ohne in den Filterkorb ausgegeben zu werden.

Weiterhin ist in einer bevorzugten Ausführungsform vorgesehen, dass die Steuerungseinheit die Absaugeinheit zu Beginn der Bestimmung der Durchlässigkeit des Filterkorbs für die Dauer eines vorbestimmten ersten Absaugzeitraumes ansteuert. Vorzugsweise steuert die Steuerungseinheit die Absaugeinheit auch in dem Schritt d) ebenfalls für die Dauer des vorbestimmten ersten Absaugzeitraumes an. Schritt d) bezieht sich hier auf Anspruch 1, nämlich das Ansteuern nach Ablauf einer Dauer eines vorbestimmten Filterzeitintervalls, der Absaugeinheit zum Entleeren des Flüssigkeitstanks mittels Absaugen eines gefilterten Flüssigkeitsvolumens aus dem Flüssigkeitstank. Die Erfinder haben herausgefunden, dass eine sich in dem Filterkorb bildende Wasserlinse des Füllstands bei einem relativ leeren Behälter großen Einfluss auf ein Messergebnis hat. Dies ist bedingt durch die große Fläche des Wasserstands. Je größer die Grundfläche des Bioreaktors bzw. des Filterkorbs ist, desto größer ist hier der Einfluss. Wird vermeintlich nur noch Luft angesaugt, wird der Wasserstand reduziert, indem die Wasserlinse zusätzlich abgesaugt wird, da durch den Luftsog der Wasserstand um wenige Millimeter verändert wird und so zusätzliche Flüssigkeit abgesaugt wird. Dies kann das Messergebnis erheblich beeinflussen. Aus diesem Grund wird vorzugsweise stets mit einer konstanten Dauer gesaugt, unabhängig von dem tatsächlich abgesaugten Volumen.

Alternativ oder zusätzlich kann auch vorgesehen sein, dass während des Absaugens in allen oder einigen der Schritte, in denen ein Absaugen aus dem Flüssigkeitstank durchgeführt wird, mittels einer Absaugdetektionseinheit überwacht wird, ob Flüssigkeit oder Luft angesaugt wird. Die Absaugdetektionseinheit weist vorzugsweise einen Absaugsensor auf, der beispielsweise als kapazitiver Sensor ausgebildet sein kann. Über einen solchen kapazitiven Sensor kann die Kapazität von in der Abflussleitung vorhandenem Luft-Flüssigkeits-Gemisch erfasst werden. Der Absaugsensor stellt dann vorzugsweise ein Absaugsignal an der elektronischen Steuereinheit bereit, welchen das Luft-Flüssigkeits-Verhältnis repräsentiert. Je größer das Verhältnis von Luft zu Flüssigkeit ist, desto geringer ist eine Dielektrizitätskonstante des Luft-Flüssigkeits-Gemischs in der Abflussleitung. Dies kann mittels des kapazitiven Sensors erfasst werden. Durch eine solche Absaugdetektionseinheit kann also erkannt werden, ob der Flüssigkeitstank tatsächlich leer ist, oder weiter abgesaugt werden muss. Unterschreitet das Absaugsignal einen vorbestimmten Absauggrenzwert, der beispielsweise eine Dielektrizitätskonstante ist, wird das Absaugen vorzugsweise noch für ein vorbestimmtes Zeitintervall fortgesetzt. Dieses Zeitintervall beträgt vorzugsweise etwa 1 Sekunde bis 10 Sekunden, vorzugsweise etwa 2 Sekunden. Auf diese Weise kann erreicht werden, dass nur so lange abgesaugt wird wie notwendig ist, um die Restflüssigkeit bzw. das gefilterte Flüssigkeitsvolumen aus dem Flüssigkeitstank zu entfernen und diesen vollständig zu entleeren. Der Absaugsensor kann alternativ oder zusätzlich zum kapazitiven Sensor auch einen Dichtesensor oder Durchflusssensor sein.

Vorzugsweise weist die Flüssigkeitsdosiereinheit einen Messzylinder auf und das Verfahren umfasst den Schritt: Aufnehmen des vorbestimmten Flüssigkeitsvolumens in den Messzylinder. Dieser Schritt wird durchgeführt, bevor das vorbestimmte Flüssigkeitsvolumen in den Filterkorb ausgegeben wird. Auf diese Weise lässt sich das Flüssigkeitsvolumen einfach und genau abmessen. Der Messzylinder dient vorzugsweise dazu, beim angesaugten Luft-Flüssigkeits-Gemisch, die Luft von der Flüssigkeit zu separieren. Beim Absaugen wird in der Regel über den größten Zeitraum des Absaugens ein solches Gemisch angesaugt, sodass ein einfacher Durchflussmesser nicht ausreichend ist, die Flüssigkeitsmenge zu bestimmen.

Das Verfahren umfasst vorzugsweise den Schritt: Aufnehmen des abgesaugten gefilterten Flüssigkeitsvolumens in dem Messzylinder, vordem Messen des Volumens des abgesaugten gefilterten Flüssigkeitsvolumens. Der Messzylinder kann so für zwei Zwecke verwendet werden, nämlich zum Abmessen des vorbestimmten Flüssigkeitsvolumens und auch zum Messen des abgesaugten gefilterten Flüssigkeitsvolumens.

Zum Aufnehmen des abgesaugten gefilterten Flüssigkeitsvolumens wird vorzugsweise ein Unterdruck an den Messzylinder angelegt, um das gefilterten Flüssigkeitsvolumen abzusaugen und so in dem Messzylinder aufzunehmen. Hierzu ist vorzugsweise ein Unterdruckanschluss an dem Messzylinder vorgesehen.

Ferner weist der Messzylinder vorzugsweise einen berührungslosen Abstandssensor auf zum Erfassen einer Füllstandshöhe in dem Messzylinder. Vorzugsweise wird das Messen des Volumens des abgesaugten gefilterten Flüssigkeitsvolumens dann mittels des berührungslosen Abstandssensor ausgeführt. Der Abstandssensor kann beispielsweise als Ultraschallsensor, Laser- bzw. Lidar-Sensor, Radarsensor oder dergleichen ausgebildet sein. Weitere Vorteile und Ausführungsformen des Verfahrens ergeben sich auch aus der nachfolgenden Beschreibung einer Vorrichtung sowie auch aus der nachfolgenden Figurenbeschreibung.

Weiterhin wird die oben genannte Aufgabe in einem zweiten Aspekt gelöst durch eine Durchlasstestvorrichtung zur automatisierten Reinigung eines Filterkorbs in einem Bioreaktor. Wiederrum ist die Durchlasstestvorrichtung vorzugsweise Teil einer Bioreaktorreinigungsanlage, die zum Reinigen des Bioreaktors an diesen angeschlossen wird. Der Filterkorb des Bioreaktors steht auslassseitig in Fluidverbindung mit einem Flüssigkeitstank und wird bodenseitig und seitlich durch filternde Wände begrenzt wird. Die Durchlasstestvorrichtung umfasst gemäß diesem Aspekt der Erfindung eine elektronische Steuerungseinheit, die in Signalverbindung zu einer Absaugeinheit, einer Flüssigkeitsdosiereinheit und einer Messeinheit steht, sowie auch in Signalverbindung zu einer Reinigungseinheit steht oder bringbar ist, wobei die Absaugeinheit in Fluidverbindung mit der Messeinheit steht. Wiederum gilt, dass die genannten Elemente nicht zwangsläufig ausschließlich der Durchlasstestvorrichtung zugeordnet sein müssen, sondern vielmehr Teil der Bioreaktorreinigungsanlage sein können. Insbesondere ist die Steuerungseinheit vorzugsweise eine zentrale Steuerungseinheit Bioreaktorreinigungsanlage. Die Steuerungseinheit ist dazu ausgebildet, die Absaugeinheit, die Flüssigkeitsdosiereinheit und die Messeinheit zur Bestimmung einer Durchlässigkeit des Filterkorbes anzusteuern. Die Steuerungseinheit ist konkreter dazu ausgebildet zum Ansteuern der Absaugeinheit zum Absaugen einer Restflüssigkeit aus dem Flüssigkeitstank durch eine Abflussleitung, hierauffolgendes Ansteuern der Flüssigkeitsdosiereinheit zum Ausgeben einer Flüssigkeit mit einem vorbestimmten Flüssigkeitsvolumen in den Filterkorb durch eine Spülleitung, und Beenden der Ausgabe der Flüssigkeit zu einem Filterstartzeitpunkt. Die Steuerungseinheit ist ferner ausgebildet zum Ansteuern, nach Ablauf einer Dauer eines vorbestimmten Filterzeitintervalls, welches ab dem Filterstartzeitpunkt beginnt, der Absaugeinheit zum Entleeren des Flüssigkeitstanks mittels Absaugen eines gefilterten Flüssigkeitsvolumens aus dem Flüssigkeitstank durch die Abflussleitung, Messen des Volumens des im vorherigen Schritt abgesaugten gefilterten Flüssigkeitsvolumens der gefilterten Flüssigkeit in einer Messeinheit und Empfangen eines ein erstes Messergebnis repräsentierendes erstes Messsignal von der Messeinheit. Die Steuerungseinheit ist dann ferner dazu ausgebildet, einen ersten Durchlässigkeitsquotienten aus dem Volumen des im vorherigen Schritt abgesaugten gefilterten Flüssigkeitsvolumen zu dem Volumen des zu Beginn des Verfahrens ausgegebenen vorbestimmten Flüssigkeitsvolumens in der Steuerungseinheit zu bilden und den ersten Durchlässigkeitsquotienten mit einem ersten vorbestimmten Durchlässigkeitsgrenzwert zu vergleichen.

Die Steuerungseinheit ist vorzugsweise auch dazu ausgebildet, die Reinigungseinheit zur Reinigung des Filterkorbs anzusteuern, falls der im vorherigen Schritt gebildete erste Durchlässigkeitsquotient den ersten Durchlässigkeitsgrenzwert unterschreitet. Für den letzten Schritt ist es erforderlich, dass die Steuerungseinheit mit der Reinigungseinheit in Signalverbindung steht.

Wiederum ist die dann gegebenenfalls durchgeführte Reinigung nach dem Bestimmen der Durchlässigkeit übelicherweise in der Praxis bereits die zweite Reinigung. In der Praxis wird ein Bediener die die Bioreaktorreinigungsanlage samt Durchlasstestvorrichtung an den Bioreaktor anschließen und zunächst manuell eine Reinigung durchführen. Danach wir dann die Durchlasstestvorrichtung genutzt, um die Durchlässigkeit des Filterkorbs zu bestimmen und dann gegebenenfalls eine weitere Reinigung durchgeführt.

Es soll ferner verstanden werden, dass das Verfahren gemäß dem ersten Aspekt der Erfindung und die Durchlasstestvorrichtung gemäß dem zweiten Aspekt der Erfindung, gleiche und ähnliche Unteraspekte aufweisen, wie sie insbesondere in den abhängigen Ansprüchen niedergelegt sind. Insofern wird für besondere Ausführungsformen, Weiterentwicklungen und deren Vorteile vollumfänglich auf die obige Beschreibung zum ersten Aspekt der Erfindung verwiesen.

Vorzugsweise weist die Durchlasstestvorrichtung einen Abflussleitungsanschluss zum Anschließen der Durchlasstestvorrichtung an die Abflussleitung und einen Spülanschluss zum Anschließen der Durchlasstestvorrichtung an die Spülleitung auf. Hierfür können entsprechende Kamlok-Kupplungsteile vorgesehen sein. Auch ist es denkbar und bevorzugt, dass die Durchlasstestvorrichtung dauerhaft mit der Abflussleitung und der Spülleitung verbunden ist, beispielsweise über Mehrwegeventile.

Weiterhin weist die Durchlasstestvorrichtung vorzugsweise einen Frischwasseranschluss zum Zuführen von Frischwasser zu der Durchlasstestvorrichtung und einen Druckluftanschluss zum Zuführen von Druckluft zu der Durchlasstestvorrichtung auf.

Gemäß einer weiteren bevorzugten Ausführungsvariante ist das Abflussrohr an einer Seite des Feststofftanks angeordnet.

Gemäß einer weiteren bevorzugten Ausführungsvariante mündet das Abflussrohr mit einer Abflussrohröffnung in den Feststofftank und die Unterkante der Abflussrohröffnung ist in einem Abstand zu einer Innenfläche der Bodenwand des Feststofftanks angeordnet.

In einer weiteren bevorzugten Ausführungsform der Durchlasstestvorrichtung ist die Steuerungseinheit dazu ausgebildet, nach Abschluss des Reinigungsprozesses die Absaugeinheit, die Flüssigkeitsdosiereinheit und die Messeinheit zu einer zweiten Bestimmung einer Durchlässigkeit des Filterkorbs anzusteuern. Hierzu führt sie die Schritte aus: Ansteuern der Absaugeinheit zum Absaugen einer Restflüssigkeit aus dem Flüssigkeitstank durch die Abflussleitung, Ansteuern der Flüssigkeitsdosiereinheit zum Ausgeben einer Flüssigkeit mit einem vorbestimmten Flüssigkeitsvolumen in den Filterkorb durch die Spülleitung, und Beenden der Ausgabe der Flüssigkeit zu einem Filterstartzeitpunkt. Anschließend führt sie die Schritte aus: Ansteuern, nach Ablauf einer Dauer eines vorbestimmten Filterzeitintervalls, welches ab dem Filterstartzeitpunkt beginnt, der Absaugeinheit mittels der Steuerungseinheit zum Entleeren des Flüssigkeitstanks mittels Absaugen eines gefilterten Flüssigkeitsvolumens aus dem Flüssigkeitstank durch die Abflussleitung, Messen des Volumens des im vorherigen Schritt abgesaugten gefilterten Flüssigkeitsvolumens der gefilterten Flüssigkeit in einer Messeinheit und Empfangen eines ein zweites Messergebnis repräsentierendes zweites Messsignal von der Messeinheit in der Steuerungseinheit. Die Steuerungseinheit ist ferner dazu ausgebildet, einen zweiten Durchlässigkeitsquotienten aus dem Volumen des abgesaugten gefilterten Flüssigkeitsvolumen zu dem Volumen des ausgegebenen vorbestimmten Flüssigkeitsvolumen zu bilden, und den gebildeten zweiten Durchlässigkeitsquotienten mit einem zweiten vorbestimmten Durchlässigkeitsgrenzwert zu vergleichen, wobei der zweite Durchlässigkeitsgrenzwert vorzugsweise dem ersten vorbestimmten Durchlässigkeitsgrenzwert entspricht, oder größer als der erste vorbestimmte Durchlässigkeitsgrenzwert ist. Die Steuerungseinheit ist weiterhin dazu ausgebildet, nach der zweiten Bestimmung einer Durchlässigkeit des Filterkorbs, die Reinigungseinheit zur Durchführung eines zweiten Reinigungsprozesses des Filterkorbs anzusteuern, falls der gebildete Durchlässigkeitsquotient den zweiten vorbestimmten Durchlässigkeitsgrenzwert unterschreitet.

Gemäß einer weiteren bevorzugten Ausführungsvariante ist die Steuerungseinheit ausgebildet, die Reinigungseinheit nach Bestimmen der Durchlässigkeit des Filterkorbs zur Durchführung eines mechanischen Reinigungsprozesses anzusteuern, wenn der erste Durchlässigkeitsquotient einen ersten Reinigungsgrenzwert, der niedriger ist als der Durchlässigkeitsgrenzwert, unterschreitet. Die Steuerungseinheit ist vorzugsweise dazu ausgebildet, die Reinigungseinheit zur Durchführung eines chemischen Reinigungsprozesses anzusteuern, wenn der erste Durchlässigkeitsquotient den ersten Reinigungsgrenzwert überschreitet, jedoch niedriger ist als der erste Durchlässigkeitsgrenzwert.

Gemäß einer weiteren bevorzugten Ausführungsvariante ist die Steuerungseinheit ausgebildet, die Reinigungseinheit nach dem zweiten Bestimmen einer Durchlässigkeit des Filterkorbs zur Durchführung eines mechanischen zweiten Reinigungsprozesses anzusteuern, wenn der zweite Durchlässigkeitsquotient einen zweiten Reinigungsgrenzwert, der kleiner ist als der zweite Durchlässigkeitsgrenzwert und größer ist als der erste Reinigungsgrenzwert, unterschreitet. Die Steuerungseinheit ist vorzugsweise ferner dazu ausgebildet, die Reinigungseinheit zur Durchführung eines chemischen zweiten Reinigungsprozesses anzusteuern, wenn der zweite Durchlässigkeitsquotient den zweiten Reinigungsgrenzwert überschreitet, jedoch niedriger ist als der zweite Durchlässigkeitsgrenzwert.

Die Durchlasstestvorrichtung weist vorzugsweise einen Trübungssensor und/oder einen Leitfähigkeitssensor stromabwärts der Abflussleitung auf, der mit der Steuerungseinheit verbunden ist zum Bereitstellen eines eine Trübung der abgesaugten Flüssigkeit repräsentierenden Trübungssignals und/oder eine Leitfähigkeit der abgesaugten Flüssigkeit repräsentierenden Leitfähigkeitssignals an der Steuerungseinheit. Hierdurch können zusätzliche Informationen über den Reinigungszustand des Bioreaktors gewonnen werden. Diese zusätzlichen Informationen können dazu verwendet werden, zu ermitteln, ob ein weiterer Reinigungsprozess notwendig ist, und wenn ja, ob dieser mechanisch und/chemisch ausgeführt werden sollte.

In einer bevorzugten Weiterbildung weist die Flüssigkeitsdosiereinheit der Durchlasstestvorrichtung einen Messzylinder auf, in welchen das vorbestimmte Flüssigkeitsvolumen aufgenommen wird. Der Messzylinder ist vorzugsweise wenigstens teilweise aus transparentem Material oder weist ein Fenster auf, sodass ein Bediener die darin vorhandene Flüssigkeit auch optisch überprüfen kann. Der Messzylinder ist vorzugsweise so ausgebildet und angeschlossen, dass auch das abgesaugte gefilterte Flüssigkeitsvolumen in den Messzylinder aufnehmbar ist. Dies kann beispielsweise dadurch erreicht werden, dass der Messzylinder mit der Absaugeinheit verbunden ist, um einen Unterdruck an diesem anzulegen.

Vorteilhafterweise weist der Messzylinder einen berührungslosen Abstandssensor auf zum Erfassen einer Füllstandshöhe in dem Messzylinder. Der berührungslose Abstandssensor ist vorzugsweise mit der Steuerungseinheit verbunden, um an dieser ein Füllstandssignal bereitzustellen, das den Füllstand in dem Messzylinder repräsentiert. Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen. Es zeigen:
- Fig. 1: eine schematische Darstellung eines Bioreaktors in einer ersten Variante im Querschnitt;
- Fig. 2: eine schematische Darstellung eines Bioreaktors in einer zweiten Variante im Querschnitt;
- Fig. 3: einen schematischen Ausschnitt eines Feststofftanks des Bioreaktors im Querschnitt;
- Fig. 4a: eine schematische Ansicht einer Durchlasstestvorrichtung gemäß einem ersten Ausführungsbeispiel, die an einen Bioreaktor angeschlossen ist;
- Fig. 4b: eine schematische Ansicht einer Bioreaktorreinigungsanlage, die die Durchlasstestvorrichtung gemäß Fig. 4a aufweist und an einen Bioreaktor angeschlossen ist;
- Fig. 5a-5i: Ansicht eines hydraulischen Schaltplans der Durchlasstestvorrichtung gemäß Fig. 4a, 4b;
- Fig. 6a, 6b: zwei Ansichten einer Durchlasstestvorrichtung;
- Fig. 7: eine Ansicht einer weiteren Durchlasstestvorrichtung; und
- Fig. 8a-8c: eine schematische Abfolge der Schritte eines Verfahrens zur automatisierten Reinigung eines Filterkorbs in einem Bioreaktor.

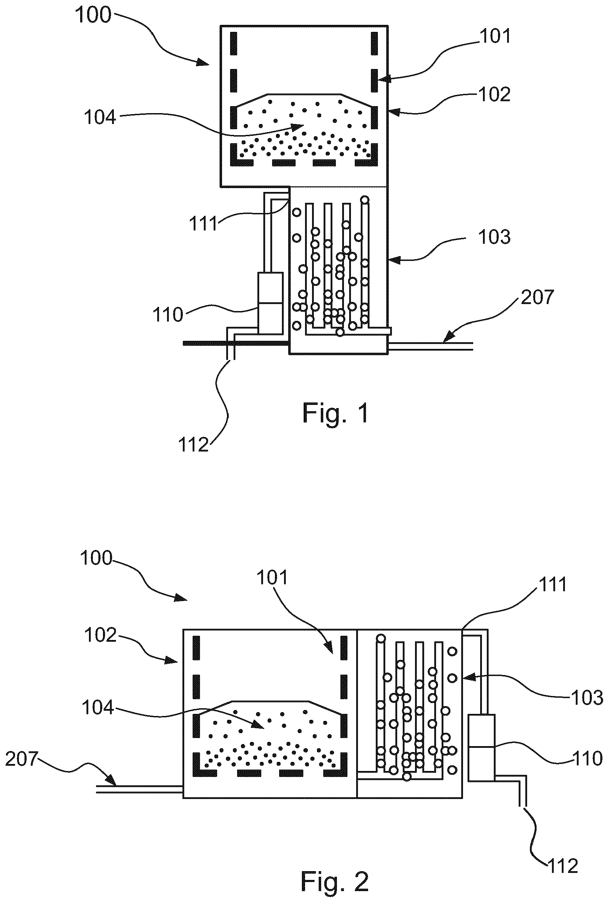

Fig. 1 zeigt eine schematische Darstellung eines Bioreaktors 100 in einer ersten Variante im Querschnitt. Ein derartiger Bioreaktor kann beispielsweise in Personenzügen eingebaut sein, um Abwasser aus Toiletten und Waschbecken bereits während der Fahrt zu reinigen und vorzugsweise auch das gereinigte Wasser während der Fahrt abzugeben. So können Reinigungs- und Entleerzyklen von Sammelbehältern an Bord des Personenzugs deutlich verlängert werden.

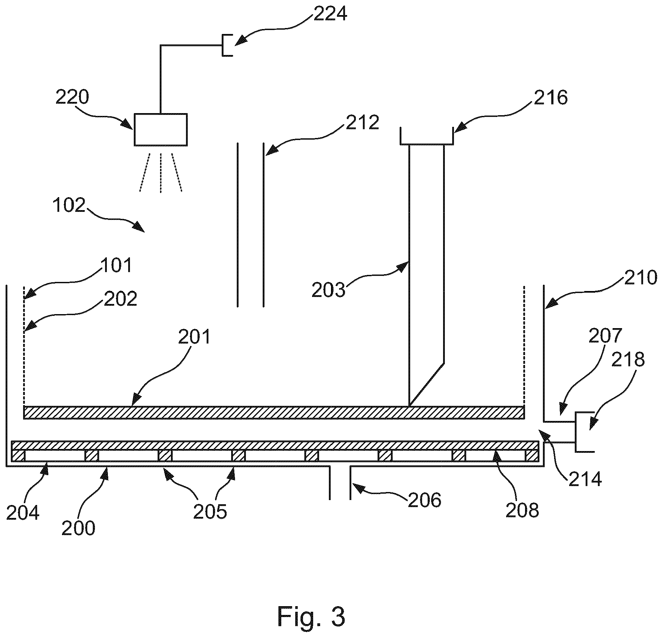

Der Bioreaktor 100 verfügt über einen Feststofftank 102 zur Aufnahme von Abwasser mit flüssigen und festen Bestandteilen. Innerhalb des Feststofftanks 102 befindet sich ein Filterkorb 101. Der Filterkorb 101 wird durch filternde Wände 201, 202 (vgl. Fig. 3), die flüssige Bestandteile durchlassen und feste Bestandteile zurückhalten, gebildet. Der Filterkorb 101 trennt die festen von den flüssigen Bestandteilen indem er die festen Bestandteile im Inneren zurückhält. Die flüssigen Bestandteile fließen aus dem Filterkorb 101 heraus und gelangen von dort schwerkraftgetrieben in den Flüssigkeitstank 103, der hier als Flüssigreaktor zur Klärung durch Bakterien, ausgebildet ist. Zwischen dem Feststofftank 102 und dem Flüssigkeitstank 103 ist eine Öffnung vorgesehen, sodass die Flüssigkeit ungehindert übertreten kann. Die festen Bestandteile bilden einen festen Filterkuchen 104 am Boden des Filterkorbs 101. Im Bereich eines Bodens 105 des Flüssigkeitstanks 103 ist eine Abflussleitung 207 vorgesehen, die im Folgenden noch genauer beschrieben werden wird. Ferner ist an dem Bioreaktor 100 ein Hygienisierer 110 vorgesehen, der über einen Überlauf 111 mit dem Flüssigkeitstank 103 verbunden ist. Flüssigkeit, die im Flüssigkeitstank 103 biologisch mittels Bakterien gereinigt wurde, kann so über den Überlauf 111 in den Hygienisierer 110 gelangen und aus diesem heraus über einen Ablauf 112 in die Umwelt abgegeben werden.

Fig. 2 zeigt eine zweite Variante des Bioreaktors 100, der sich von der Variante aus Fig. 1 dadurch unterscheidet, dass der Flüssigkeitstanks 103 neben dem Feststofftank 102 angeordnet ist. Eins solche Variante eignet sich besonders zum Unterbodeneinbau in schienengebundenen Fahrzeugen. In Fig. 2 ist zudem die Auslassleitung 207 seitlich am Feststofftank 102 angeordnet, in der Nähe des Bodens.

Fig. 3 zeigt einen schematischen Ausschnitt eines Feststofftanks 102 des Bioreaktors 100 gemäß Fig. 2 im Querschnitt. Der Feststofftank 102 wird durch einen Boden 200 und Seitenwände 210 begrenzt und kann durch ein Zulauf 212 mit Abwasser gespeist werden, das beispielsweise senkrecht von oben in einen Filterkorb 101 im Inneren des Feststofftanks 102 ragt.

Der Filterkorb 101 dient dazu, flüssige und feste Bestanteile des über den Zulauf 212 zugeführten Abwassers zu trennen. Ein Filterkorb 101 wird typischerweise an den Seiten durch Filterplatten begrenzt, welche flüssige Bestandteile durchlassen und feste Bestandteile zurückhalten. Filterelemente können beispielsweise Sinterplanten und/oder Lochplatten sein. In einer Ausführungsform ist der Filterkorb 101 an einem Boden durch eine Sinterplatte 201 begrenzt und an den umliegenden Seiten durch Lochplatten202. Die Lochplatten 202 können beispielsweise einen Lochabstand von ca. 1 mm aufweisen. Die Form der Bodenplatte ist in einer beliebigen Form ausgestaltet, beispielsweise kreisförmig oder rechteckig.

Der Boden 200 des Feststofftanks 102 wird in der Variante gemäß Fig. 2 durch horizontal verlaufende Vierkantrohren 205 getragen. Im Boden 200 des Feststofftanks 102 ist eine Frostentleerung 206 angeordnet, durch welche flüssige und feste Bestandteile innerhalb des Feststofftanks 200 entleert werden können. Diese Frostentleerung 206 ist für gewöhnlich von außen schwer zu erreichen. Weiterhin befindet sich die Abflussleitung 207 an einer Seitenwand 210 des Feststofftanks 102. Die Abflussleitung 207 ist so an der Seitenwand des Feststofftanks 102 angeordnet, dass eine untere Kante einer Mündungsöffnung 214, mit welcher das Abflussrohr 207 in den Feststofftank 102 mündet, einen Abstand zum Boden 200 des Feststofftanks 102 aufweist. Eine Restflüssigkeit 208 mit festen und flüssigen Bestandteilen kann sich so unterhalb der Unterkannte der Mündungsöffnung sammeln.

Hierdurch können feste Bestandteile gehindert werden, in die Abflussleitung 207 einzudringen. Beispielswiese kann eine Abflussleitung 207 ein vorinstalliertes Rohr sein, welches unter anderem in den Flüssigkeitstank 103 mündet.

Ferner mündet ein Spülanschluss, der hier als Spülleitung 203 fungiert, in den Filterkorb 101. Sowohl der Zulauf 212 als auch die Spülleitung 203 sind fest installiert. Die Spülleitung 203 wird allerdings im normalen Betrieb des Bioreaktors 100 nicht verwendet. Vielmehr wird Abwasser ausschließlich über den Zulauf 212 zugeführt. Beide Leitungen, die Spülleitung 203 und die Abflussleitung 207, sind im Normalbetrieb des Bioreaktors 100 verschlossen. Das Verfahren zum automatisierten Reinigen des Filterkorbs 101 nutzt nun ausschließlich die Spülleitung 203 sowie die Abflussleitung 207, um die Durchlässigkeit des Filterkorbs 101, insbesondere die Durchlässigkeit der Sinterplatte 201 zu testen. Auf diese Weise können bereits installierte Leitungen verwendet werden, ohne dass zusätzliche Leitungen, Zuläufe oder Abläufe an dem Bioreaktor 100 angebracht werden müssen. Bekannte, manuelle Verfahren nutzen hingegen die Frostentlehrung 206, was aufgrund der Lage dieser einen nicht unerheblichen Arbeitsaufwand bedeutet.

Beide Leitungen, die Abflussleitung 207 und die Spülleitung 203, sind hier mit einer Kupplung 216, 218 versehen, die die Leitungen schließen und die hier als Kamlok-Kupplungen ausgebildet sind. Beide Leitungen dienen auch im manuellen Betrieb zur Reinigung des Bioreaktors 100.

Darüber hinaus ist eine Reinigungsdüse 220 in dem Bioreaktor 100 vorgesehen, die ebenfalls fest verbaut ist. Die Reinigungsdüse ist mit einem Hochdruckanschluss 224 verbunden, sodass dieser beispielsweise Wasser unter hohem Druck zugeführt werden kann. Über diesen Anschluss 224 kann aber auch Säue oder Base für eine chemische Reinigung zugeführt werden. Für den Fall, dass der Bioreaktor 100 beispielsweise in einem schienengebundenen Fahrzeug eingebaut ist, sind die Kupplungen 216, 218 sowie der Hochdruckanschluss 224 von außerhalb des Fahrzeugs zugänglich.

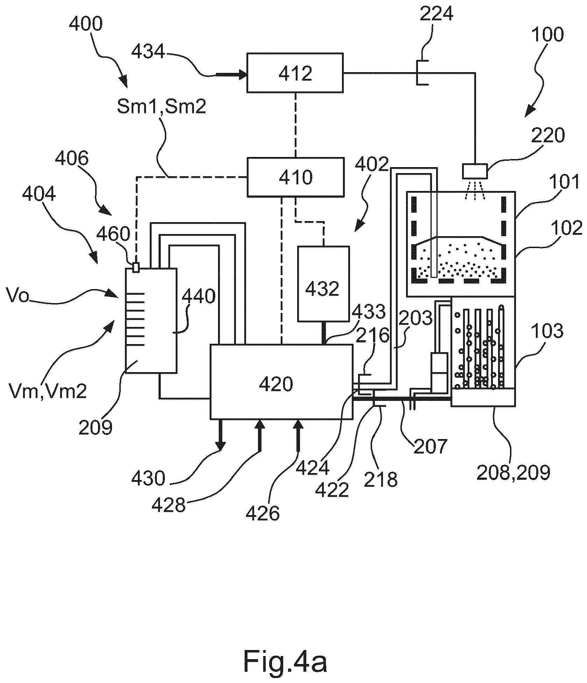

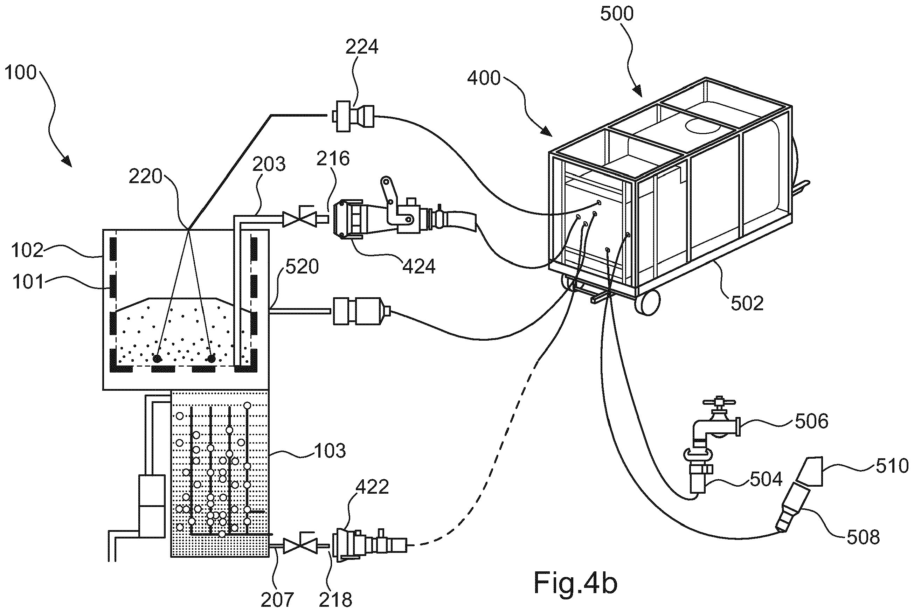

Fig. 4a illustriert nun eine Durchlasstestvorrichtung 400 schematisiert, wie sie an den Bioreaktor 100 gemäß Fig. 1 angeschlossen ist. Fig. 4b zeigt auf ähnliche Weise eine mobile Bioreaktorreinigungsanlage 500, die die Durchlasstestvorrichtung 400 gemäß Fig. 4a aufweist, an den Bioreaktor 100 angeschlossen.

Die Durchlasstestvorrichtung 400 weist eine Absaugeinheit 402 zum Absaugen von Restflüssigkeit 208 aus dem Flüssigkeitstank 103 durch die Abflussleitung 207 auf. Ferner umfasst die Durchlasstestvorrichtung 400 eine Flüssigkeitsdosiereinheit 404 zum Ausgeben einer Flüssigkeit mit einem vorbestimmten Flüssigkeitsvolumen V0 in den Filterkorb 101 durch eine Spülleitung 203. Darüber hinaus umfasst die Durchlasstestvorrichtung 400 eine Messeinheit 406, in der das abgesaugte gefilterte Flüssigkeitsvolumen Vm der gefilterten Flüssigkeit 209 gemessen wird. Zum Steuern der Absaugeinheit 402, der Flüssigkeitsdosiereinheit 404 und der Messeinheit 406 ist eine Steuerungseinheit 410 vorgesehen, die signaltechnisch mit diesen Einheiten verbunden ist. Ferner ist gemäß Fig. 4 noch eine Reinigungseinheit 412 vorgesehen, die aber nicht zwingend Teil der Durchlasstestvorrichtung 400 sein muss, sondern auch als separate Baueinheit vorzugsweise in der Bioreaktorreinigungsanlage 500 vorgesehen sein kann. Dies ist bevorzugt, da insbesondere die Reinigungseinheit 412 auch manuell betätigbar sein soll, unabhängig von der Durchlasstestvorrichtung 400. Es kann jedoch auch Ausführungsformen geben, in denen die Reinigungseinheit 412 Teil der Durchlasstestvorrichtung 400 ist.

Konkret weist die Durchlasstestvorrichtung 400 in dem in Fig. 4a gezeigten schematischen Ausführungsbeispiel eine Ventilanordnung 420 auf, die hier nur schematisch durch einen Block dargestellt ist. In der Ventilanordnung 420 können eine Mehrzahl von schaltbaren Ventilen vorgesehen sein, um die entsprechenden Flüssigkeiten zu leiten. Die Ventilanordnung 420 weist einen Abflussleitungsanschluss 422 auf, über den die Durchlasstestvorrichtung 400 an die Abflussleitung 207, genauer gesagt an die erste Kupplung 218 angeschlossen ist. Ferner weist die Ventilanordnung 420 einen Spülanschluss 424 auf, über den die Durchlasstestvorrichtung 400 an die Spülleitung 203 angeschlossen ist, genauer gesagt an die zweite Kupplung 216. Die ersten und zweiten Kupplungen 216, 218 sind öffenbar, sodass die Durchlasstestvorrichtung 400 auch an andere Anlagen anschließbar ist. Darüber hinaus weist die Ventilanordnung 420 einen Druckluftanschluss 426, einen Frischwasseranschluss 428 und einen Auslass 430 auf, über den die Ventilanordnung 420 beispielsweise angesaugte Flüssigkeit beispielsweise in einen Sammelbehälter innerhalb der Bioreaktorreinigungsanlage 500 ausstoßen kann. Der Druckluftanschluss 426 und der Frischwasseranschluss 428 sind intern innerhalb der Bioreaktorreinigungsanlage 500 an entsprechende hier nicht gezeigte Quellen angeschlossen.

Die Durchlasstestvorrichtung 400 weist ferner eine Pumpe 432 auf, die ebenfalls von der Steuerungseinheit 410 steuerbar ist. Die Pumpe 432 ist vorzugsweise als Drehkolbenpumpe ausgebildet, was Vorteile beim Ausstoßen des gefilterten Flüssigkeitsvolumens hat.

Die Pumpe 432 ist an einen Vakuumanschluss 433 der Ventilanordnung 420 angeschlossen und stellt ein Vakuum bereit. Auch die Ventilanordnung 420 sowie die Messeinheit 406 stehen in Signalverbindung mit der Steuerungseinheit 410. Die Reinigungseinheit 412 hat ebenfalls einen Frischwasseranschluss 434 und steht in Signalverbindung mit der Steuerungseinheit 410.

Wie insbesondere aus Fig. 4b ersichtlich, ist die Durchlasstestvorrichtung 400 in eine Bioreaktorreinigungsanlage 500 integriert. Die Bioreaktorreinigungsanlage 500 ist mobil ausgebildet und auf einem Wagengestellt 502 angeordnet. Die Bioreaktorreinigungsanlage 500 hat einen Frischwasseranschluss 504, der an eine Frischwasserquelle 506 angeschlossen werden kann, sowie einen Spannungsanschluss 508, der vorzugsweise an eine Hochvoltquelle angeschlossen werden kann, um die Bioreaktorreinigungsanlage 500 mit Spannung zu versorgen. Im Inneren weist die Bioreaktorreinigungsanlage 500 einen Sammelbehälter für abgesaugte Flüssigkeit sowie einen Chemikalientank für zum Beispiel Säure auf.

Soll ein Bioreaktor 100 gereinigt werden, wird die Bioreaktorreinigungsanlage 500 an den Bioreaktor 100 angeschlossen, wie in Fig. 4b dargestellt. Um zunächst eine Höhe des Filterkuchens 104 bzw. eine Füllstands des Feststofftanks 102 zu ermitteln wird ein Füllstandssensor 520 ausgelesen. Dieser gibt einen 80%-Wert und einen 95%-Wert aus, die jeweils den entsprechenden Füllungsgrad des Feststofftanks 102 angeben. Dann wird üblicherweise zunächst manuell über die Spülleitung 203 der im Filterkorb 101 vorhandene Filterkuchen 104 abgesagt. Dort finden sich oft Teile wie Papier, Damenhygieneprodukte, teilweise Besteck, verlorene Gegenstände, wie Uhren, Brille, etc. All dies wird zunächst manuell abgesaugt und dann wird manuell ausgesteuert eine mechanische Reinigung mittels der Reinigungsdüse 220 durchgeführt, um den Filterkuchen 104 zu lösen. Auch das dann aufgeschwemmte Fluid wird über die Spulleitung 203 abgesaugt.

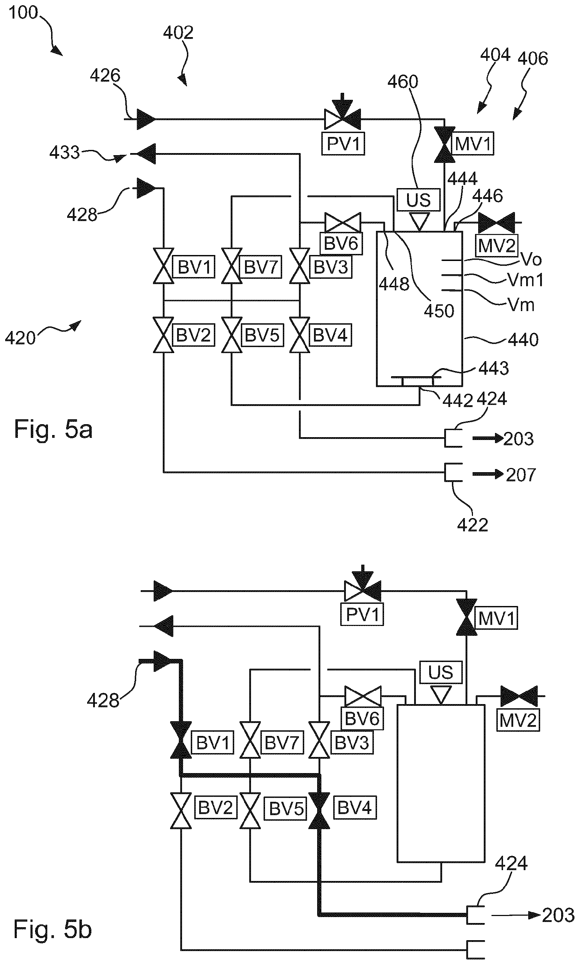

Um nun nachfolgend den Reinigungserfolg ermitteln zu können, wird das erfindungsgemäße Verfahren ausgeführt und zunächst die Durchlässigkeit ermittelt. Die genaue Funktionsweise der Durchlasstestvorrichtung 400 wird nun mit Bezug auf die Fig. 5a - 5i beschrieben werden, in denen auch weitere Elemente der Durchlasstestvorrichtung 400, sowie insbesondere Ventile der Ventilanordnung 420 im Detail gezeigt sind.

In Fig. 5a ist die Durchlasstestvorrichtung 400 zunächst in einem Ausgangszustand gezeigt. Im Gegensatz zur Fig. 4 sind nicht gezeigt die Steuerungseinheit 410, die Pumpe 432 sowie die Reinigungseinheit 412. Dennoch soll verstanden werden, dass diese Elemente vorhanden sein können. Anstatt der Pumpe 432 ist nur der Vakuumanschluss 433 gezeigt und sämtliche Ventile und Sensoren, die im Folgenden beschrieben werden, sind mit der Steuerungseinheit 410 verbunden.

Die Messeinheit 406 umfasst hier einen Messzylinder 440, der auch bereits in Fig. 4 gezeigt ist. Der Messzylinder 440 hat einen unteren Flüssigkeitsanschluss 442, einen Druckluftzulauf 444, einen Luftablass 446, einen Vakuumanschluss 448 sowie einen Messflüssigkeitseingang 450. Der unteren Flüssigkeitsanschluss 442 ist an der Unterseite des vertikal ausgerichteten Messzylinders 440 angeordnet, die anderen Anschlüsse an der Oberseite. Die radialen Seitenwände des Messzylinders 440 sind vorzugsweise aus einem transparenten Material, insbesondere Glas oder Plexiglas gebildet. An der Oberseite ist ferner ein Füllstandssensor vorgesehen, der hier als berührungsloser Abstandssensor 460 ausgebildet und ebenfalls mit der Steuerungseinheit 410 verbunden ist und die ersten und zweiten Messsignale SM1, SM2 an dieser bereitstellt. Der Abstandssensor 460 misst einen Abstand zwischen dem diesem und einer Flüssigkeitsoberfläche. Beispielsweise ist der Abstandssensor 460 als Ultraschallsensor, Radarsensor, Lasersensor oder LiDAR-Sensor ausgebildet. Oberhalb des unteren Flüssigkeitsanschluss 442 ist im Inneren des Messzylinders 440 zusätzlich eine Prallplatte 443 angeordnet, die verhindern soll, dass Flüssigkeit, welches durch den unteren Flüssigkeitsanschluss 442 zugeführt wird, bis an den Abstandssensor 460 spritzt. Auf diese Weise sollen Verunreinigungen des Abstandssensors 460 verhindert werden. Gleichzeitig kann der Drucklufteingang 444 dazu verwendet werden, einen verschmutzten Abstandssensor 460 freizublasen. Auch wenn die Prallplatte 443 in den folgenden Figuren nicht gezeigt ist, soll verstanden werden, dass sie dennoch vorhanden ist.

Die Ventilanordnung 420 umfasst hier mehrere Ventile, nämlich ein erstes Ventil BV1, ein zweites Ventil BV2, ein drittes Ventil BV3, ein viertes Ventil BV4, ein fünftes Ventil BV5, ein sechstes Ventil BV6, ein siebtes Ventil BV7 sowie ein erstes Pneumatikventil PV1, eine erste Drossel MV1 und ein Ausgleichsventil MV2. Die Drossel MV1 ist in eine Druckluftleitung zwischen dem Druckluftanschluss 426 und dem Drucklufteinlass 444 angeordnet. Sie kann manuell eingestellt werden. Üblicherweise ist die Drossel MV1 offen. Das Ausgleichsventil MV2 dient dazu, Luft aus dem Messzylinder 440 auszulassen, wenn dieser mit Flüssigkeit gefüllt wird. Das Ausgleichsventil MV2 ist im Normalbetrieb ebenfalls offen. Alle anderen Ventile sind zunächst geschlossen, wie durch deren nicht ausgefüllte Darstellung der Ventile gezeigt. Eine vollflächige Darstellung der Ventile zeigt eine Öffnung an.

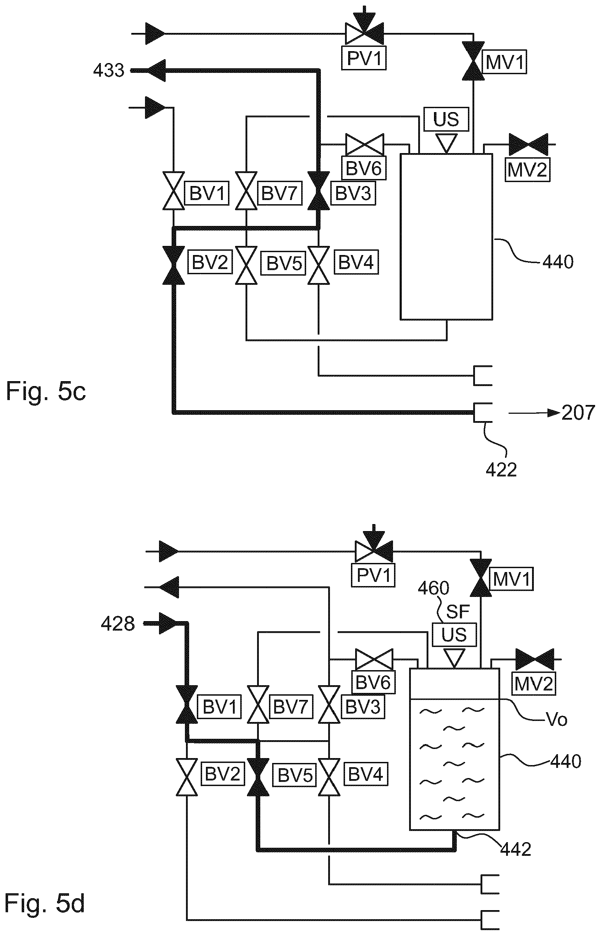

Die nachfolgenden Fig. 5b - 5i illustrieren dann verschiedene Schritte des Verfahrens 300 zum Reinigen. In einem ersten Schritt (Fig. 5b) wird zunächst die Spülleitung 203 mit Wasser gefüllt, um die Spülleitung 203 zu füllen, so dass das nachfolgende definierte Volumen ohne Verluste in den Bioreaktor 100 gefüllt werden kann. Hierzu wird das erste Ventil BV1 sowie das vierte Ventil BV4 geöffnet, sodass Wasser vom Frischwasseranschluss 428 in die Spülleitung 203 gelangen kann. Anschließend werden die Ventile BV1 und BV4 wieder geschlossen und es wird eine vorbestimmte Zeit abgewartet, sodass das restliche Wasser durch die Sinterplatte 201 fließen kann. Vorzugsweise wird hier eine erste Wartezeit gewartet, die im Bereich zwischen 10 und 1000 Sekunden liegt, vorzugsweise 100 bis 500 Sekunden, bevorzugt etwa im Bereich von 250 Sekunden. Es hat sich gezeigt, dass eine solche Zeit ausreichend ist, um Restwasser, welches auf der Sinterplatte 201 vorhanden ist, abfließen zu lassen. Im dann folgenden Schritt (Fig. 5c) wird die Absaugeinheit 402 mittels der elektronischen Steuereinheit 410 angesteuert, um Restflüssigkeit 208, die zuvor im Flüssigkeitstank 103 vorhanden war oder erst durch das Zuführen von Wasser, wie mit Bezug auf Fig. 5b beschrieben, eingeführt wurde, abgesaugt wird. Das Absaugen erfolgt durch die Abflussleitung 207, sodass nun das dritte Ventil BV3 sowie das zweite Ventil BF2 geöffnet werden, sodass der Abflussleitungsanschluss 422 mit dem Vakuumanschluss 433 verbunden ist. Diese Restflüssigkeit wird dann einfach über den Auslass 430 ausgegeben.

Anschließend kann ohne eine Wartezeit fortgefahren werden, und zwar mit einem Ansteuern der Flüssigkeitsdosiereinheit 404 mittels der elektronischen Steuereinheit 410 zum Aufnehmen eines vorbestimmten Flüssigkeitsvolumens V0 in den Messzylinder 440. Das vorbestimmte Flüssigkeitsvolumen V0 ist in den Fig. 5a und 4a eingezeichnet. Zu diesem Zweck werden dann das erste Ventil BV1 und das fünfte Ventil BV5 geöffnet, sodass Frischwasser vom Frischwasseranschluss 428 zum unteren Flüssigkeitsanschluss 442 des Messzylinders 440 fließen kann und in den Messzylinder 440 gelangt. Gleichzeitig strömt Luft, die vorher im Messzylinder 440 war, über das Auslassventil MV2 aus dem Messzylinder 440 heraus. Das Erreichen des vorbestimmten Flüssigkeitsvolumens V0 wird vorzugsweise mittels des Abstandssensors 460 ermittelt. Dieser stellt ein entsprechendes Signal SF, das einen Füllstand repräsentiert, an der Steuerungseinheit 410 bereit, die bei Erreichen des vorbestimmten Flüssigkeitsvolumens V0 das erste Ventil BV1 und das fünfte Ventil BV5 schließt.

An diesen Schritt kann sich nun wieder eine Wartezeit anschließen. Dies ist allerdings nicht zwingend erforderlich. Die Wartezeit hängt hier maßgeblich davon ab, ob bereits Flüssigkeit in den Filterkorb 101 gegeben werden soll oder nicht.

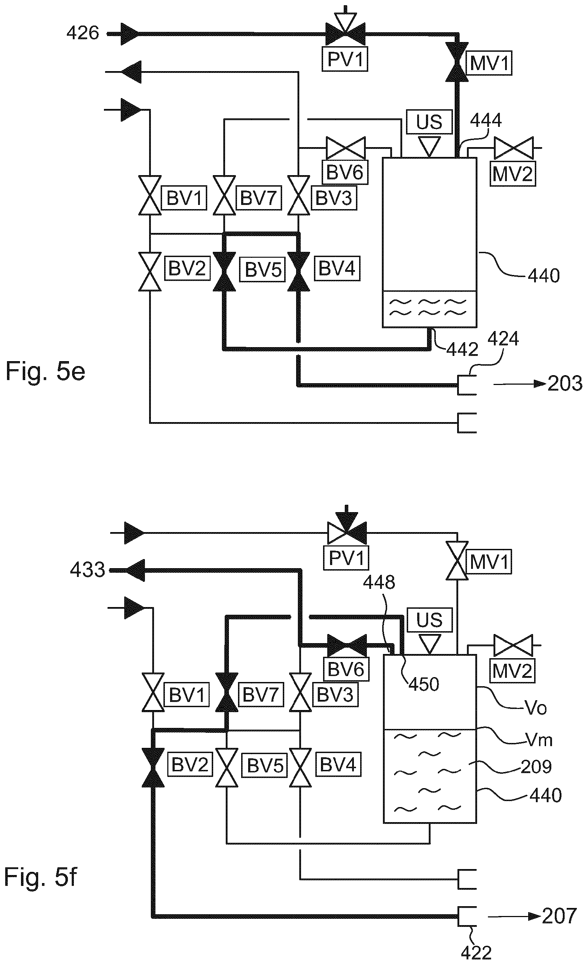

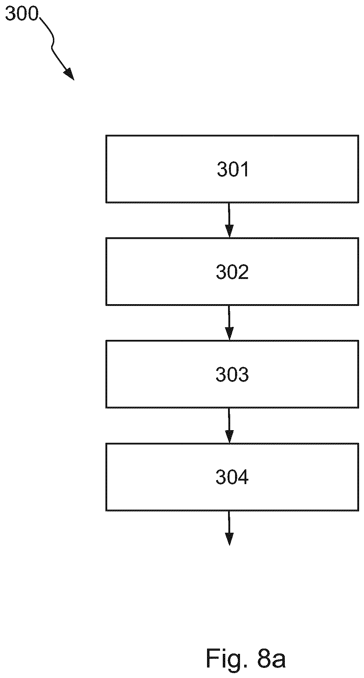

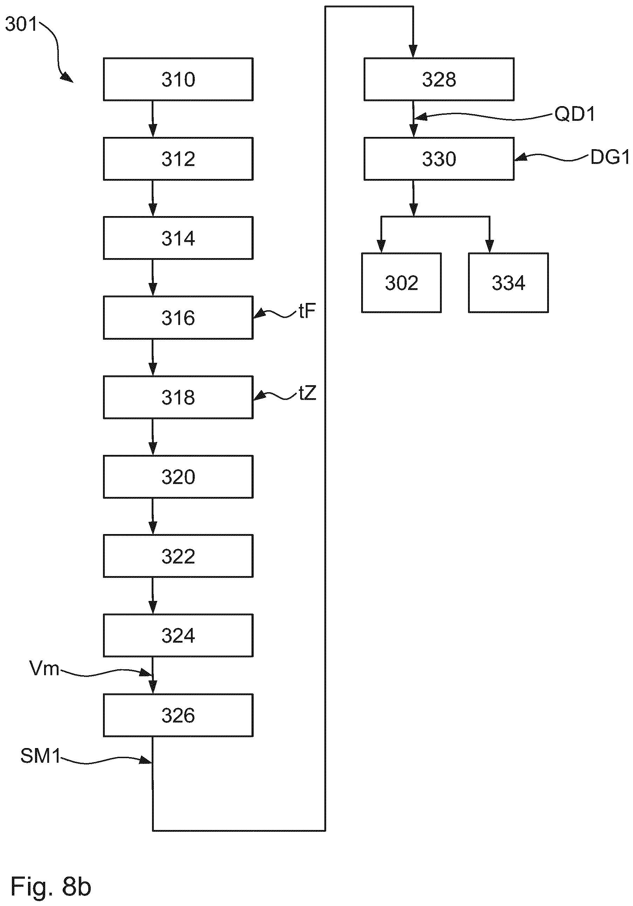

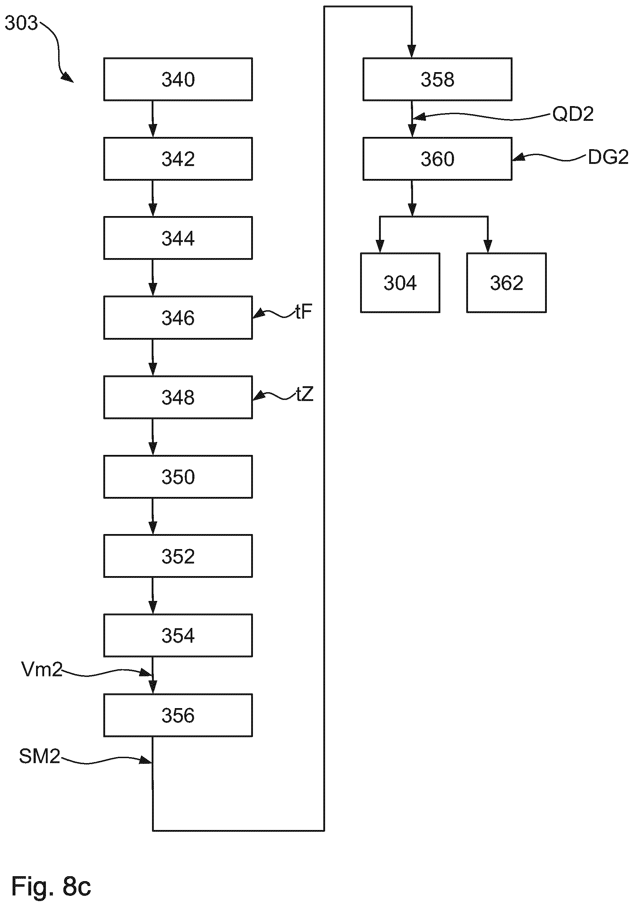

Das Ausgeben des vorbestimmten Flüssigkeitsvolumens V0 in den Filterkorb 101 ist in Fig. 5e illustriert. Hierzu wird zunächst das Ausgleichsventil MV2 geschlossen, sodann die Ventile BV4 und BV5 geöffnet, sodass der unteren Flüssigkeitsanschluss 442 des Messzylinders 440 fluidleitend mit dem Spülanschluss 424 und somit der Spülleitung 203 verbunden ist. Anschließend wird auch das erste Pneumatikventil PV1 geöffnet, sodass Druckluft über den Drucklufteingang 444 in den Messzylinder 440 strömen kann und so das darin befindliche Volumen V0 der Flüssigkeit herausdrücken kann. Hierbei ist die Drossel MV1 zu beachten. Es ist wichtig, dass die Flüssigkeit nicht schwallartig in den Filterkorb 101 gegeben wird, sondern nach und nach, beispielsweise mit 5 Litern pro Minute oder weniger, insbesondere 2,5 Litern pro Minute oder weniger. Anschließend folgt wieder eine Wartezeit, die der ersten Wartezeit entsprechen kann und ebenso im Bereich zwischen 10 und 1000 Sekunden liegen kann. Die Bemessung dieser zweiten Wartezeit ist im Wesentlichen davon abhängig, wie rasch die zugegebene Flüssigkeit durch den Filterkorb 101 strömt, insbesondere durch die Sinterplatte 201. Ist beispielsweise eine sehr große Fläche vorgesehen, kann die Wartezeit auch kürzer bemessen sein. In dem gezeigten Ausführungsbeispiel beträgt sie vorzugsweise 250 Sekunden. Diese Wartezeit entspricht der Dauer des vorbestimmten Filterzeitintervalls tZ (vgl. Fig. 8), welches ab dem Filterstartzeitpunkt (tF) beginnt. Dieser ist dann, wenn die Abgabe gemäß Fig. 5e gestoppt wurde.

Nun wird das sechste Ventil BV6 geöffnet, um Vakuum an dem Vakuumanschluss 448 anlegen zu können, während das Ausgleichsventil MV2 nach wie vor geschlossen ist. Gleichzeitig wird das zweite Ventil BV2 und das siebte Ventil BV7 geöffnet, sodass der Messflüssigkeitseingang 450 ebenfalls geöffnet ist. Da nun Unterdruck innerhalb des Messzylinders 440 herrscht, wird über die Abflussleitung 207 und den Abflussleitungsanschluss gefilterte Flüssigkeit 209 über den Messflüssigkeitseingang 450 in den Messzylinder 440 gesaugt.

Hier kann entweder nach einer vorbestimmten Zeitdauer abgesaugt werden oder in Abhängigkeit davon, ob Luft angesaugt wird oder nicht. Dies wurde bereits vorstehend beschrieben. Beispielsweise wird hier für einen Zeitraum von etwa 50 Sekunden abgesaugt, um die gefilterte Flüssigkeit in den Messzylinder 440 zu befördern. Dies erfolgt hier ungedrosselt.

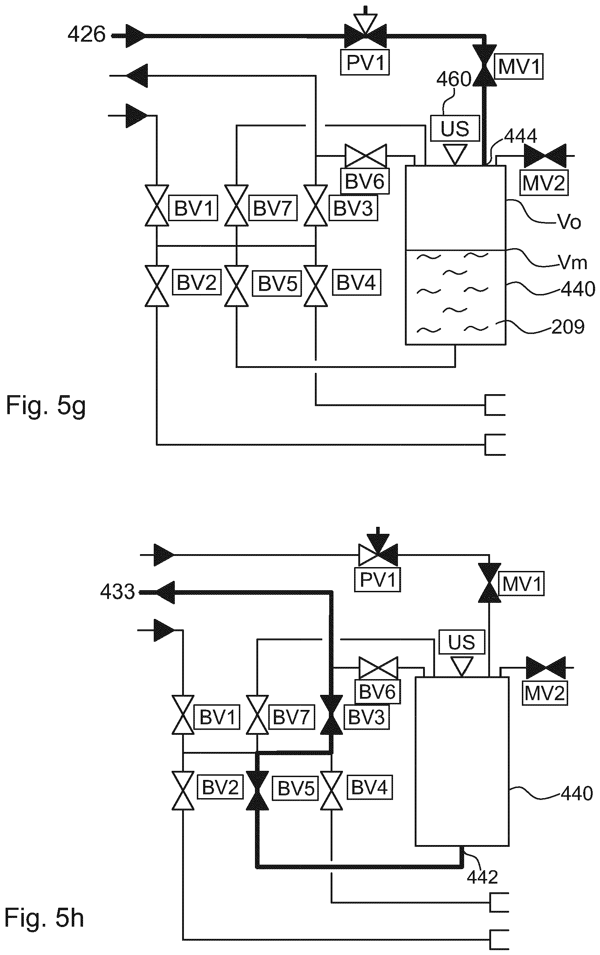

Um nun Messfehler zu vermeiden wird vorzugsweise in einem weiteren Schritt der Abstandssensor 460 gereinigt. Dies ist in Fig. 5g illustriert. Zu diesem Zweck werden das zweite Ventil BV2, das sechste Ventil BV6 und das siebte Ventil BV7 wieder geschlossen, aber das Ausgleichsventil MV2 geöffnet. Gleichzeitig wird das erste Pneumatikventil PV1 für einen kurzen Zeitraum geöffnet, sodass Druckluft über den Druckluftanschluss 426 und den Drucklufteinlass 444 in den Messzylinder 440 strömen kann und so den Abstandssensors 460 freipustet. Anschließend wird mittels des Abstandssensors 460 der Abstand zwischen diesem und der Oberfläche der Flüssigkeit 209 innerhalb des Messzylinders 440 gemessen. Hier wird der Füllstand Vm ermittelt und ein entsprechendes Signal SM1 an der Steuerungseinheit 410 bereitgestellt.

Die Steuerungseinheit 410 bildet dann einen ersten Durchlässigkeitsquotienten QD1 (vgl. Fig. 8b) aus dem Volumen Vm der Flüssigkeit, die abgesaugt wurde, sowie dem Volumen V0 der Flüssigkeit, die in den Filterkorb 101 gegeben wurde. In dem gezeigten Ausführungsbeispiel ist das Volumen Vm der abgesaugten Flüssigkeit geringer als das Volumen V0 der zugegebenen Flüssigkeit, was bedeutet, dass noch Flüssigkeit auf der Sinterplatte 201 verbleibt und beispielsweise innerhalb des Filterkuchens 104 aufgesaugt ist. Dies deutet auf eine geringe Durchlässigkeit hin. Das heißt, je kleiner dieser Durchlässigkeitsquotient ist, desto geringer ist die Durchlässigkeit. Unterschreitet nun dieser Durchlässigkeitsquotient QD1 einen erste Durchlässigkeitsgrenzwert DG1, der beispielsweise bei 0,8 liegen kann, wird die Reinigungseinheit 412 angesteuert. Dies kann mittels der Steuerungseinheit 410 erfolgen, auch wenn dies nicht zwingend erforderlich ist. Es kann ebenso vorgesehen sein, dass eine weitere Steuerungseinheit 410 die Reinigungseinheit 412 ansteuert.

Gleichzeitig hiermit oder nachfolgend muss nun der Messzylinder 440 geleert werden. Dies ist in Fig. 5h gezeigt. Hierzu bleibt weiterhin das Ausgleichsventil MV2 offen, während zusätzlich das dritte Ventil BV3 und das fünfte Ventil BV5 geöffnet werden. Auf diese Weise ist der unteren Flüssigkeitsanschluss 442 mit dem Vakuumanschluss 433 verbunden, sodass die Flüssigkeit 209 abgesaugt wird. Sie kann dann wiederum über den Auslass 430 abgegeben werden. Dieses Absaugen kann dann stoppen, wenn noch Luft angesaugt wird, oder wenn der Abstandssensor 460 erfasst, dass keine Flüssigkeit mehr in dem Messzylinder 440 ist.

In einem letzten Schritt wird dann die Spülleitung 203 leergesaugt, indem der Spülanschluss 424 mit dem Vakuumanschluss 433 verbunden wird. Hierzu werden das dritte Ventil BV3 und das vierte Ventil BV4 geöffnet.

Wenn nun der erste Reinigungsprozess, der mittels der Reinigungseinheit 412 gestartet wurde, beendet ist, kann ein weiterer Durchlässigkeitstest erfolgen. Hier werden im Prinzip dieselben Schritte durchgeführt, wobei wiederum vorzugsweise dasselbe vorbestimmte Volumen V0 angeführt wird. Es kann aber auch vorgesehen sein, dass nur ein geringeres Volumen oder ein höheres Volumen als das erste vorbestimmte Volumen V0 zugeführt werden. Nach dem Absaugen wird dann ein zweites Volumen gefilterter Flüssigkeit VM2 erfasst, welches in der Regel größer ist als das erste Volumen VM der gefilterten Flüssigkeit im ersten Zyklus. Weitere Unterschiede ergeben sich nicht. Auch die Wartezeiten sind vorzugsweise identisch, können aber beim zweiten Zyklus auch verkürzt sein.

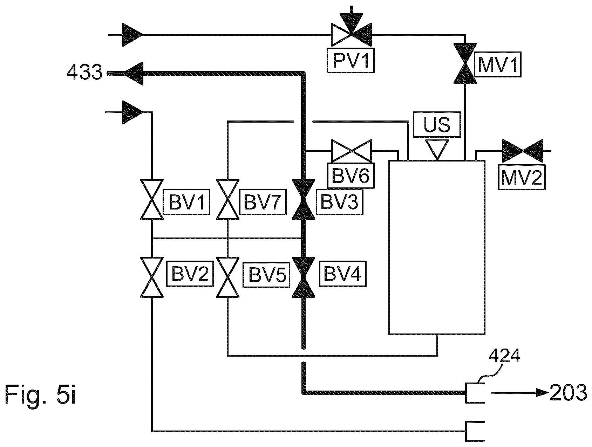

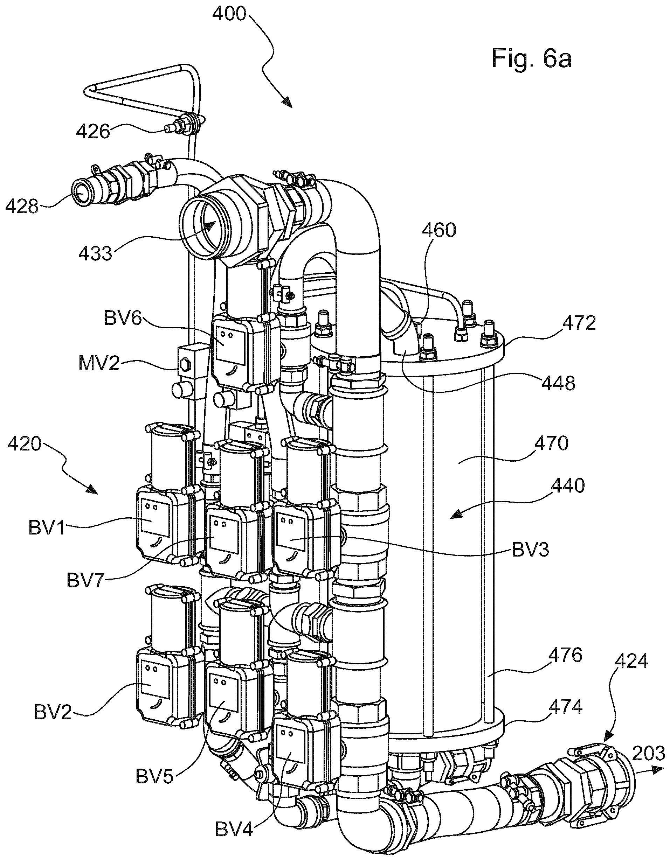

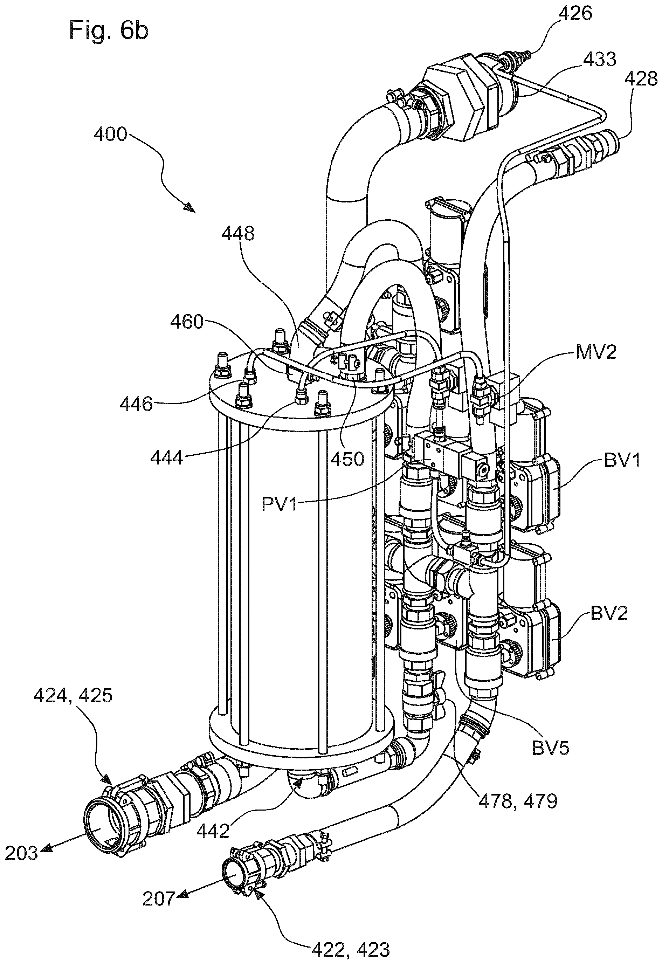

Die Fig. 6a und 6b zeigen nun eine erste konstruktive Umsetzung der Durchlasstestvorrichtung 400, wie in den Fig. 4 und 5 beschrieben. Die in den Fig. 6a, 6b gezeigte Durchlasstestvorrichtung 400 ist zur Erweiterung bestehender Bioreaktorreinigungsanlagen bzw. Absauganlagen ohne Durchlasstestervorgesehen. Sie kann als Retrofit in solche Anlagen integriert werden, und Vakuum, Wasser und Druckluft aus fremden Quellen zugeführt werden. Gleiche und ähnliche Elemente sind mit gleichen Bezugszeichen wie in den vorherigen Figuren bezeichnet, sodass für diese Elemente vollumfänglich auf die obige Beschreibung Bezug genommen wird. Wiederum sind in den Fig. 6a und 6b die Steuerungseinheit 410, die Reinigungseinheit 412 und die Pumpe 432 weggelassen. Insofern entspricht der Aufbau der Fig. 6a, 6b dem der Fig. 5a - 5i. Wie sich aus den Fig. 6a, 6b ergibt, sind die einzelnen Ventile BV1 - BV7, MV1, MV2, PV1 mittels Flüssigkeits- oder Druckluftleitungen miteinander verbunden, die entweder Luft oder Flüssigkeit führen können. Der Spülanschluss 424 sowie der Ausflussleitungsanschluss 422 sind jeweils als Kamlok-Kupplungen 425, 423 ausgebildet, um so an entsprechende Anschlüsse an dem Bioreaktor 100 bzw. einem gleisgebundenen Fahrzeug, in dem der Bioreaktor 100 eingebaut ist, angeschlossen zu werden.

Der Messzylinder 400 ist hier aus einem zylindrischen transparenten Rohrstück 470 gebildet, das an seinem oberen und unteren Stirnende jeweils mit einem Deckel 472 bzw. Boden 474 verschlossen ist. Deckel 472 und Boden 474 sind über Spannschrauben 476 (nur eine mit Bezugszeichen versehen) gegeneinander verspannt. In dem Deckel 472 sind die Anschlüsse 448, 450, 444, 446 sowie der Abstandssensors 460 angeordnet und befestigt. In dem Boden 474 ist der untere Flüssigkeitsanschluss 442 vorgesehen.

In Fig. 6b ist zusätzlich zu sehen, dass in einer Leitung zwischen dem Frischwassereinlass 442 und dem fünften Ventil BV5 ein Kugelhahn 478 als Drossel 479 eingebaut ist. Es hat sich herausgestellt, dass abgesaugte Restflüssigkeit, Frischwasser sowie jegliche Flüssigkeit, die über den untere Flüssigkeitsanschluss 442 in den Messzylinder 440 eingeführt wird, nicht mit zu hohem Druck eingeführt werden sollte, um eine Verschmutzung des Abstandssensors 460 zu vermeiden. Grundsätzlich ist es auch denkbar und bevorzugt, die Drossel 479 elektronisch steuerbar auszugestalten. In der hier gezeigten Ausführungsform ist sie allerdings rein mechanisch und kann von einem Bediener manuell eingestellt werden.

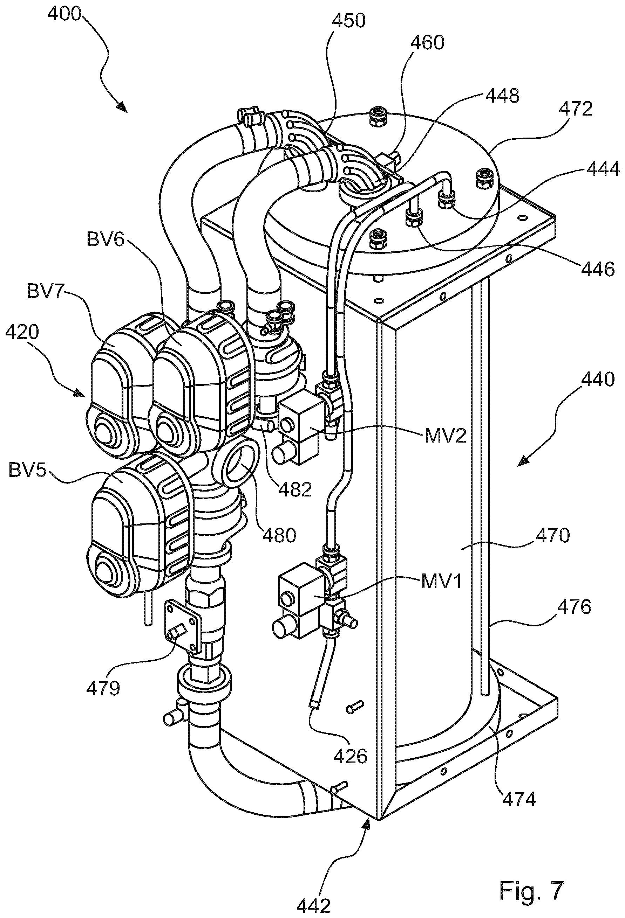

Fig. 7 zeigt nun eine zweite praktische Umsetzung der Durchlasstestvorrichtung 400, die sich insbesondere für den Einbau in die in Fig. 4b gezeigte Bioreaktorreinigungsanlage 500 mit einem höheren Automatisierungsgrad eignet. Aus diesem Grund ist insbesondere die Ventilanordnung 420 anders gestaltet als in dem vorherigen Ausführungsbeispiel (Fig. 6a, 6b) sowie auch die Anschlüsse. Gleiche und ähnliche Elemente sind wiederum mit gleichen Bezugszeichen versehen, sodass für diese vollumfänglich auf die obige Beschreibung Bezug genommen wird.

Wie sich insbesondere aus Fig. 7 ergibt, sind hier nur das fünfte Ventil BV5, das sechste Ventil BV6 und das siebte Ventil BV7 vorhanden. In üblicherweise bereits vorhandenen Bioreaktoren mit einer manuellen Durchlasstestvorrichtung sind die übrigen Ventile vorhanden oder ersetzt, sodass hier das Vorsehen dieser drei Ventile BV5, BV6, BV7 ausreicht. Zwischen den Ventilen BV5 und BV7 ist ein Flüssigkeitsanschluss 480 vorgesehen, an dem die zwischen den Ventilen BV1 und BV2 beziehungsweise BV3 und BV4 (vgl. Fig. 5a) abzweigenden Leitungen angeschlossen werden können. Das heißt, an den Flüssigkeitsanschluss 480 sollte zunächst ein T-Stück oder Verteilerstück angeschlossen werden, um dann die entsprechenden Leitungen anzuschließen. Der Flüssigkeitsanschluss 480 nimmt demnach sowohl Frischwasser als auch Flüssigkeit aus dem Bioreaktor auf und leitet dieses entsprechend der Schaltung der Ventile BV5, BV7 entweder an den untere Flüssigkeitsanschluss 442 oder den Flüssigkeitseinlass 450 weiter. Das Ventil BV6 ist mit einem Unterdruckanschluss 482 versehen, der in entsprechender Weise mit der Leitung, die den Unterdruckanschluss 433 und das dritte Ventil BV3 gemäß Fig. 5a verbindet, verbunden sein kann.

Fig. 8a schließlich illustriert nun übersichtlich das Verfahren 300 zur automatisierten Reinigung des Filterkorbs 101 in einem Bioreaktor 100. Es umfasst zunächst ein Schritt des Bestimmens 301 einer Durchlässigkeit des Filterkorbs 101 und nach diesem ein Ansteuern 302 einer Reinigungseinheit 412 wie vorstehend grundsätzlich beschrieben, zur Durchführung eines Reinigungsprozesses des Filterkorbs 101, falls bestimmte Kriterien erreicht sind. Hieran kann sich eine zweite Bestimmung der Durchlässigkeit 303 des Filterkorbs 101 anschließen, die identisch oder ähnlich zur ersten Bestimmung 301 durchgeführt werden kann. An die zweite Bestimmung 303 schließt sich dann vorzugsweise wiederum ein Ansteuern 304 der Reinigungseinheit 412 an. Diese Abfolge der Schritte wird vorzugsweise so lange ausgeführt, bis ein gewünschtes Reinigungsergebnis erzielt wurde. Auch dem Schritt 301 vorangegangen können Reinigungsschritte ausgeführt worden sein. Es ist nicht zwingend erforderlich, dass zunächst eine Durchlässigkeit bestimmt wird und dann erst ein Reinigungsschritt durchgeführt wird. Denkbar ist ebenso, dass zunächst ein Reinigungsschritt durchgeführt wird und erst anschließend die Durchlässigkeit bestimmt wird.

Fig. 8b illustriert nun den Schritt 301 im Detail. Der Schritt 301 (Bestimmen der Durchlässigkeit des Filterkorbs 101) umfasst in einem Ausführungsbeispiel zunächst in einem ersten Schritt ein Ansteuern 310 der Absaugeinheit 102 mittels der elektronischen Steuereinheit 410 zum Absaugen der Restflüssigkeit 208 aus dem Flüssigkeitstank 103. Anschließend wird, wie mit Bezug auf die Fig. 5a - 5i beschrieben, zunächst das vorbestimmte Flüssigkeitsvolumen in den Messzylinder 440 aufgenommen. Dies erfolgt in Schritt 312. Anschließend wird in Schritt 314 die Flüssigkeitsdosiereinheit 404 angesteuert, um das vorbestimmte Flüssigkeitsvolumen V0 in den Filterkorb 101 auszugeben. Hierbei soll verstanden werden, dass Schritt 312 nicht zwingend erforderlich ist. Es kann auch vorgesehen sein, dass das vorbestimmte Flüssigkeitsvolumen V0 direkt, ohne vorheriges Abmessen in dem Messzylinder 440, in den Filterkorb 101 ausgegeben wird. Anschließend wird in Schritt 316 das Ausgeben der Flüssigkeit beendet. Dies erfolgt zu einem Filterstartzeitpunkt tF. Wichtig in dem Schritt 314 ist, dass die Flüssigkeit nicht zu schnell in den Filterkorb 101 gegeben wird, sondern wie vorstehend beschrieben mit einer Abgaberate. Wenn der Filterstartzeitpunkt tF bestimmt ist, durch das Beenden der Ausgabe der Flüssigkeit, wird in Schritt 318 zunächst ein vorbestimmtes FilterzeitintervalltZ abgewartet, um der Flüssigkeit, die in den Filterkorb 101 gegeben wurde, Zeit zu geben, durch den Filterkuchen 104 zu gelangen. Anschließend wird in Schritt 320 die Absaugeinheit 402 angesteuert, um mittels dieser den Flüssigkeitstank 103 zu entleeren. In dem Flüssigkeitstank 103 befindet sich das gefilterte Flüssigkeitsvolumen 209, das durch den Filterkorb 101 gelangt ist und sich im Flüssigkeitstank 103 sammelt. In Schritt 322 wird dieses abgesaugte gefilterte Flüssigkeitsvolumen 209 in dem Messzylinder 440 aufgenommen. Anschließend wird in Schritt 324 das Volumen VM des abgesaugten gefilterten Flüssigkeitsvolumens 209 gemessen. Nach dem Messen wird ein entsprechendes das erste Messergebnis repräsentierendes erstes Messsignal SM1 gesendet (Schritt 326), und zwar an die Steuerungseinheit 410. Diese bildet dann in Schritt 328 einen ersten Durchlässigkeitsquotienten QD1 aus dem Volumen Vm, welches vorher gemessen wurde, und dem Volumen V0, welches zu Beginn in den Filterkorb 101 gegeben wurde. Anschließend vergleicht die Steuerungseinheit 410 den ersten Durchlässigkeitsquotienten QD1 mit einem ersten vorbestimmten Durchlässigkeitsgrenzwert DG1. Anschließend erfolgt eine Fallunterscheidung: Falls der erste DurchlässigkeitsquotientQD1 den ersten Durchlässigkeitsgrenzwert DG1 unterschreitet, wird die Reinigungseinheit angesteuert 332. Überschreitet allerdings der erste Durchlässigkeitsquotient den ersten Durchlässigkeitsgrenzwert DG1 oder entspricht diesem, wird das Verfahren vorzugsweise beendet. Gleichzeitig kann vorgesehen sein, dass im Schritt 334 ein Signal ausgegeben wird, das anzeigt, dass das gewünschte Reinigungsergebnis erreicht ist. Eine Reinigung muss dann nicht weiter durchgeführt werden.

Je nachdem, wie weit der erste Durchlässigkeitsquotient QD1 den ersten Durchlässigkeitsgrenzwert DG1 unterschreitet, kann zudem unterschieden werden zwischen einer mechanischen oder einer chemischen Reinigung. Dies sind dann weitere Unterschritte des Schritts 302. Wird der erste Durchlässigkeitsgrenzwert DG1 um einen ersten Betrag durch den ersten Durchlässigkeitsquotienten QD1 unterschritten, wird vorzugsweise ein chemischer Reinigungsprozess durchgeführt. Wird der erste Durchlässigkeitsgrenzwert DG1 allerdings um einen zweiten Wert durch den ersten Durchlässigkeitsquotienten QD1 unterschritten, wird ein mechanischer Reinigungsprozess durchgeführt. Wie die ersten und zweiten Werte ausgewählt sind, wird vorzugsweise durch den Hersteller oder durch den Betreiber des Bioreaktors 100 vorgegeben. Die genauen Beträge dieser Werte sind abhängig von der Art des Bioreaktors 100, der Art des Filterkorbs 101 sowie anderer Parameter, die hier nicht Gegenstand der Erfindung sind.

An den ersten Reinigungsprozess im Schritt 302 kann sich eine zweite Bestimmung der Durchlässigkeit 303 anschließen, wie mit Bezug auf Fig. 8a beschrieben. Die zweite Bestimmung der Durchlässigkeit 303 wird nun mit Bezug auf Fig. 8c im Detail beschrieben.

In einem Schritt 340 wird die Absaugeinheit 402 mittels der elektronischen Steuereinheit 410 zum Absaugen der dann im Flüssigkeitstank 103 vorhandenen Restflüssigkeit 208 angesteuert. Dies ist analog zum Schritt 310 und kann identisch ausgeführt werden. Insbesondere kann das Absaugen in Schritt 340 identisch zum Absaugen in Schritt 310 ausgeführt werden. In Schritt 342 wird dann ein vorbestimmtes Flüssigkeitsvolumen V0 in den Messzylinder 440 aufgenommen. Das vorbestimmte Flüssigkeitsvolumen V0, welches hier in Schritt 342 aufgenommen wird, kann dem vorbestimmten Flüssigkeitsvolumen V0 entsprechen, das in Schritt 312 aufgenommen wird. Allerdings kann auch jeweils ein anderes vorbestimmtes Flüssigkeitsvolumen V0 verwendet werden. In Schritt 344 wird dann die Flüssigkeitsdosiereinheit 404 mittels der elektronischen Steuerungseinheit 410 angesteuert, um das vorbestimmte Flüssigkeitsvolumen V0 in den Filterkorb 101 auszugeben. Dies kann identisch zum Schritt 314 ausgeführt werden, insbesondere mit derselben Abgaberate. Alternativ kann aber auch eine andere Abgaberate verwendet werden. In Schritt 346 wird das Abgeben dann beendet, wiederum zu einem Filterstartzeitpunkt tF. Anschließend wird in Schritt 348 für ein vorbestimmtes Filterzeitintervall tZ abgewartet. Das Filterzeitintervall tZ in Schritt 348 kann ein zweites Filterzeitintervall sein, welches sich von dem ersten Filterzeitintervall tZ im Schritt 318 unterscheidet. Vorzugsweise sind die Filterzeitintervalle tZ aber identisch gewählt.

Anschließend, nach Ablauf des Filterzeitintervalls tZ, wird mittels der Steuerungseinheit 410 die Absaugeinheit 402 angesteuert (Schritt 350), um das gefilterte Flüssigkeitsvolumen 209 aus dem Flüssigkeitstank 103 abzusaugen. Das Absaugen kann hier wiederum für dieselbe Zeitdauer durchgeführt werden wie dies in Schritt 320 getan wurde. In Schritt 352 wird das abgesaugte Flüssigkeitsvolumen dann wiederum in dem Messzylinder 440 aufgenommen. In Schritt 354 wird das aufgenommene Volumen Vm2 gemessen. Das in dem zweiten Durchgang aufgenommene Volumen Vm2 ist in der Regel etwas größer als das im ersten Durchgang aufgenommene Volumen Vm, da der Filterkorb zwischenzeitlich in Schritt 302gereinigt wurde. In Schritt 356 wird dann ein zweites Messsignal SM2 an die Steuerungseinheit 410 gesendet, das ein zweites Messergebnis repräsentiert. In Schritt 358 wird von der Steuerungseinheit ein zweiter Durchlässigkeitsquotient QD2 gebildet. Hierzu verwendet die Steuerungseinheit das Volumen Vm2 des zuvor abgesaugten gefilterten Flüssigkeitsvolumens zu dem Volumen V0, das im Schritt 344 in den Filterkorb gegeben wurde. In Schritt 360 wird dann der so gebildete zweite Durchlässigkeitsquotient QD2 mit einem zweiten vorbestimmten Durchlässigkeitsgrenzwert DG2 verglichen. Anschließend findet wieder eine Fallunterscheidung statt. Wird festgestellt, dass der zweite Durchlässigkeitsgrenzwert QD2 den zweiten Durchlässigkeitsgrenzwert DG2 unterschreitet, wird der Reinigungsprozess im Schritt 304 (vgl. Fig. 8a) wie oben beschrieben durchgeführt. Anderenfalls kann wiederum ein Signal ausgegeben werden in Schritt 362, welches angibt, dass das gewünschte Reinigungsergebnis erreicht wurde. Auch im Reinigungsschritt 304 kann wiederum zwischen einer mechanischen und chemischen Reinigung unterschieden werden.

## Patentansprüche

1. Verfahren (300) zur automatisierten Reinigung eines Filterkorbs (101) in einem Bioreaktor (100), wobei der Filterkorb (101) auslassseitig in Fluidverbindung mit einem Flüssigkeitstank (102) steht, und wobei der Filterkorb (101) bodenseitig und seitlich durch filternde Wände (201, 202) begrenzt wird, umfassend
- Bestimmen (301) einer Durchlässigkeit des Filterkorbs (101), umfassend die Schritte:
a. Ansteuern (310) einer Absaugeinheit (402) mittels einer elektronischen Steuerungseinheit (410) zum Absaugen einer Restflüssigkeit (208) aus einem Flüssigkeitstank (103) durch eine Abflussleitung (207),
b. hierauffolgendes Ansteuern (314) einer Flüssigkeitsdosiereinheit (404) mittels der elektronischen Steuerungseinheit (410) zum Ausgeben einer Flüssigkeit mit einem vorbestimmten Flüssigkeitsvolumen (V0) in den Filterkorb (101) durch eine Spülleitung (203),
c. Beenden (316) der Ausgabe der Flüssigkeit zu einem Filterstartzeitpunkt (tF),
d. Ansteuern (320), nach Ablauf einer Dauer eines vorbestimmten Filterzeitintervalls (tZ), welches ab dem Filterstartzeitpunkt (tF) beginnt, der Absaugeinheit (402) mittels der Steuerungseinheit (410) zum Entleeren des Flüssigkeitstanks (103) mittels Absaugen eines gefilterten Flüssigkeitsvolumens (209) aus dem Flüssigkeitstank (103) durch die Abflussleitung (207),
e. Messen (324) des Volumens (Vm) des in Schritt d) abgesaugten gefilterten Flüssigkeitsvolumens der gefilterten Flüssigkeit (209) in einer Messeinheit (406) und Senden (326) eines ein erstes Messergebnis repräsentierendes ersten Messsignal (SM1) von der Messeinheit (406) an die Steuerungseinheit (410),
f. Bilden (328) eines ersten Durchlässigkeitsquotienten (QD1) aus dem Volumen (Vm) des in Schritt d) abgesaugten gefilterten Flüssigkeitsvolumen zu dem Volumen (V0) des in Schritt b) ausgegebenen vorbestimmten Flüssigkeitsvolumens in der Steuerungseinheit (410), und
g. Vergleichen (330) des ersten Durchlässigkeitsquotienten (QD1) mit einem ersten vorbestimmten Durchlässigkeitsgrenzwert (DG1) durch die Steuerungseinheit (410); und
- Ansteuern (302) einer Reinigungseinheit (412) zur Durchführung eines Reinigungsprozesses des Filterkorbs (101), falls der erste Durchlässigkeitsquotient (QD1) den ersten Durchlässigkeitsgrenzwert (DG1) unterschreitet.

2. Verfahren nach Anspruch 1,
wobei nach Abschluss des Reinigungsprozesses eine zweite Bestimmung einer Durchlässigkeit (303) des Filterkorbs (101) durchgeführt wird, umfassend die Schritte:
h. Ansteuern (340) der Absaugeinheit (402) mittels der elektronischen Steuerungseinheit (410) zum Absaugen einer Restflüssigkeit (208) aus dem Flüssigkeitstank (103) durch die Abflussleitung (207),
i. Ansteuern (344) der Flüssigkeitsdosiereinheit (404) mittels der elektronischen Steuerungseinheit (410) zum Ausgeben einer Flüssigkeit mit einem vorbestimmten Flüssigkeitsvolumen (V0) in den Filterkorb (103) durch die Spülleitung (203),
j. Beenden (346) der Ausgabe der Flüssigkeit zu einem Filterstartzeitpunkt (tF),
k. Ansteuern (350), nach Ablauf einer Dauer eines vorbestimmten Filterzeitintervalls (tZ), welches ab dem Filterstartzeitpunkt beginnt, der Absaugeinheit (402) mittels der Steuerungseinheit (410) zum Entleeren des Flüssigkeitstanks (103) mittels Absaugen eines gefilterten Flüssigkeitsvolumens (209) aus dem Flüssigkeitstank (103) durch die Abflussleitung (207),
l. Messen (354) des Volumens (Vm2) des in Schritt k.) abgesaugten gefilterten Flüssigkeitsvolumens der gefilterten Flüssigkeit (209) in der Messeinheit (406) und Senden eines ein zweites Messergebnis repräsentierendes zweiten Messsignals (SM2) von der Messeinheit (406) an die Steuerungseinheit (410),
m. Bilden (358) eines zweiten Durchlässigkeitsquotienten (QD2) aus dem Volumen (Vm2) des in Schritt k.) abgesaugten gefilterten Flüssigkeitsvolumen zu dem Volumen (V0) des in Schritt i.) ausgegebenen vorbestimmten Flüssigkeitsvolumen in der Steuerungseinheit (410), und
n. Vergleichen (360) des in Schritt m.) gebildeten zweiten Durchlässigkeitsquotienten (QD2) mit einem zweiten vorbestimmten Durchlässigkeitsgrenzwert (DG2) durch die Steuerungseinheit (410), wobei der zweite Durchlässigkeitsgrenzwert vorzugsweise
- dem ersten vorbestimmten Durchlässigkeitsgrenzwert (DG1) entspricht, oder
- größer als der erste vorbestimmte Durchlässigkeitsgrenzwert (DG1) ist; und
- wobei das Verfahren weiterhin umfasst: Ansteuern (304) der Reinigungseinheit (412) zur Durchführung eines Reinigungsprozesses des Filterkorbs (101), falls der in Schritt m.) gebildete zweite Durchlässigkeitsquotient (QD2) den zweiten Durchlässigkeitsgrenzwert (DG2) unterschreitet.

3. Verfahren nach einem der vorstehenden Ansprüche, wobei
- der Reinigungsprozess ein mechanischer Reinigungsprozess ist, falls der in Schritt f.) gebildete erste Durchlässigkeitsquotient einen ersten Reinigungsgrenzwert, der niedriger ist als der erste Durchlässigkeitsgrenzwert, unterschreitet; und
- wobei der Reinigungsprozess ein chemischer Reinigungsprozess ist, falls der in Schritt f.) gebildete erste Durchlässigkeitsquotient den ersten Reinigungsgrenzwert überschreitet, jedoch niedriger ist als der erste Durchlässigkeitsgrenzwert.

4. Verfahren nach Anspruch 2 und 3, wobei die Reinigungseinheit
- einen mechanischen zweiten Reinigungsprozess durchführt, falls der in Schritt m.) gebildete zweite Durchlässigkeitsquotient einen zweiten Reinigungsgrenzwert, der kleiner ist als der zweite Durchlässigkeitsgrenzwert und größer ist als der erste Reinigungsgrenzwert, unterschreitet; und
- einen chemischen zweiten Reinigungsprozess durchführt, falls der zweite Durchlässigkeitsquotient den zweiten Reinigungsgrenzwert überschreitet, jedoch niedriger ist als der zweite Durchlässigkeitsgrenzwert.

5. Verfahren nach einem der vorstehenden Ansprüche, wobei die Bodenseite (201) des Filterkorbs (101) eine Gesamtbodenflächengröße aufweist und das ausgegebene vorbestimmte Flüssigkeitsvolumen (V0) dem Produkt aus der Gesamtbodenflächengröße und einer Füllhöhe von 0,25 cm bis 2,5 cm, vorzugsweise 0,25 cm bis 1 cm, insbesondere 0,5 cm in dem Filterkorb (101) bemessen ist.

6. Verfahren nach Anspruch 2, wobei die Flüssigkeitsdosiereinheit (404) in Schritt i.) so mittels der elektronischen Steuerungseinheit (410) angesteuert wird, dass das Ausgeben der Flüssigkeit mit dem vorbestimmten Flüssigkeitsvolumen (V0) mit einer Ausgaberate erfolgt, die den Quotienten aus dem in Schritt e.) gemessenen Volumen (Vm) zu dem vorbestimmten Filterzeitintervall gemäß Schritt d.) nicht überschreitet.

7. Verfahren nach einem der vorstehenden Ansprüche, wobei während des Absaugens in Schritt a.), d.), h.) und/oder k.) mittels einer Absaugdetektionseinheit überwacht wird, ob Flüssigkeit oder Luft abgesaugt wird, und wobei zwischen dem Schritt a) und b) die Spülleitung (203), über die das vorbestimmte Flüssigkeitsvolumen (V0) zudosiert wird, vollständig mit Flüssigkeit gefüllt wird.

8. Verfahren nach einem der vorstehenden Ansprüche, **dadurch gekennzeichnet, dass** die Absaugeinheit in Schritt a) für die Dauer eines vorbestimmten ersten Absaugzeitraums angesteuert wird und vorzugsweise die Absaugeinheit in Schritt d) für die Dauer des vorbestimmten ersten Absaugzeitraums angesteuert wird.

9. Verfahren nach einem der vorstehenden Ansprüche, **dadurch gekennzeichnet, dass** die Absaugeinheit (402) in Schritt a) ab dem Zeitpunkt, an dem keine reine Flüssigkeit mehr, sondern ein Flüssigkeits-Luft-Gemisch abgesaugt wird, noch für die Dauer eines vorbestimmten ersten Absaugzeitraums angesteuert wird und dass die Absaugeinheit (402) in Schritt e) ab dem Zeitpunkt, an dem keine reine Flüssigkeit mehr, sondern ein Flüssigkeits-Luft-Gemisch abgesaugt wird, noch für die Dauer des vorbestimmten ersten Absaugzeitraums angesteuert wird.

10. Verfahren nach einem der vorstehenden Ansprüche, wobei die Flüssigkeitsdosiereinheit (404) einen Messzylinder (440) aufweist und das Verfahren den Schritt umfasst:
- Aufnehmen des vorbestimmten Flüssigkeitsvolumens (V0) in den Messzylinder (440),
bevor das vorbestimmte Flüssigkeitsvolumen in den Filterkorb (101) ausgegeben wird,
ferner umfassend den Schritt:
- Aufnehmen des abgesaugten gefilterten Flüssigkeitsvolumens in dem Messzylinder (440),
vordem Messen des Volumens (Vm, Vm1) des abgesaugten gefilterten Flüssigkeitsvolumens,
wobei zum Aufnehmen des abgesaugten gefilterten Flüssigkeitsvolumen ein Unterdruck an den Messzylinder (440) angelegt wird, um das gefilterten Flüssigkeitsvolumen abzusaugen und so in dem Messzylinder (440) aufzunehmen.

11. Durchlasstestvorrichtung (400) zur automatisierten Reinigung eines Filterkorbs (101) in einem Bioreaktor (100), wobei der Filterkorb (101) auslassseitig in Fluidverbindung mit einem Flüssigkeitstank (103) steht und bodenseitig und seitlich durch filternde Wände (201, 202) begrenzt wird,
die Durchlasstestvorrichtung (400) umfassend eine elektronische Steuerungseinheit (410), die in Signalverbindung zu einer Absaugeinheit (402), einer Flüssigkeitsdosiereinheit (404), einer Messeinheit (406) und vorzugsweise einer Reinigungseinheit (412) steht, wobei die Absaugeinheit (402) in Fluidverbindung mit der Messeinheit (406) steht, und wobei die Steuerungseinheit (410) ausgebildet ist, die Absaugeinheit (402), die Flüssigkeitsdosiereinheit (404) und die Messeinheit (406) zur Bestimmung (301) einer Durchlässigkeit des Filterkorbes (103) anzusteuern, **dadurch gekennzeichnet, dass**
die Steuerungseinheit (410) ausgebildet ist, zum
a. Ansteuern der Absaugeinheit (402) zum Absaugen einer Restflüssigkeit (208) aus dem Flüssigkeitstank (103) durch eine Abflussleitung (207),
b. hierauffolgenden Ansteuern der Flüssigkeitsdosiereinheit (404) zum Ausgeben einer Flüssigkeit mit einem vorbestimmten Flüssigkeitsvolumen (V0) in den Filterkorb (103) durch eine Spülleitung (203),
c. Beenden der Ausgabe der Flüssigkeit zu einem Filterstartzeitpunkt,
d. Ansteuern, nach Ablauf einer Dauer eines vorbestimmten Filterzeitintervalls, welches ab dem Filterstartzeitpunkt beginnt, der Absaugeinheit (402) zum Entleeren des Flüssigkeitstanks (103) mittels Absaugen eines gefilterten Flüssigkeitsvolumens (209) aus dem Flüssigkeitstank (103) durch die Abflussleitung (207),
e. Messen des Volumens (Vm) des in Schritt d) abgesaugten gefilterten Flüssigkeitsvolumens der gefilterten Flüssigkeit (209) in einer Messeinheit (406) und Empfangen eines ein erstes Messergebnis repräsentierendes ersten Messsignal (SM1) von der Messeinheit (406),
f. Bilden eines ersten Durchlässigkeitsquotienten aus dem Volumen (Vm) des in Schritt d) abgesaugten gefilterten Flüssigkeitsvolumen zu dem Volumen (V0) des in Schritt b) ausgegebenen vorbestimmten Flüssigkeitsvolumens in der Steuerungseinheit (410), und
g. Vergleichen des ersten Durchlässigkeitsquotienten mit einem ersten vorbestimmten Durchlässigkeitsgrenzwert durch die Steuerungseinheit (410);
und
wobei die Steuerungseinheit (410) ausgebildet ist, die Reinigungseinheit (412) zur Reinigung des Filterkorbs (103) anzusteuern (302), falls der in Schritt f.) gebildete erste Durchlässigkeitsquotient den ersten Durchlässigkeitsgrenzwert unterschreitet.

12. Durchlasstestvorrichtung nach Anspruch 11, wobei die Steuerungseinheit (410) ausgebildet ist, nach Abschluss des Reinigungsprozesses die Absaugeinheit (402), die Flüssigkeitsdosiereinheit (404) und die Messeinheit (406) zu einer zweiten Bestimmung einer Durchlässigkeit (303) des Filterkorbs (101) anzusteuern, mit den Schritten:
h. Ansteuern der Absaugeinheit (402) zum Absaugen einer Restflüssigkeit aus dem Flüssigkeitstank (103) durch die Abflussleitung (207),
i. Ansteuern der Flüssigkeitsdosiereinheit (404) zum Ausgeben einer Flüssigkeit mit einem vorbestimmten Flüssigkeitsvolumen (V0) in den Filterkorb (101) durch die Spülleitung (203),
j. Beenden der Ausgabe der Flüssigkeit zu einem Filterstartzeitpunkt,
k. Ansteuern, nach Ablauf einer Dauer eines vorbestimmten Filterzeitintervalls, welches ab dem Filterstartzeitpunkt beginnt, der Absaugeinheit (402) mittels der Steuerungseinheit (410) zum Entleeren des Flüssigkeitstanks (103) mittels Absaugen eines gefilterten Flüssigkeitsvolumens (209) aus dem Flüssigkeitstank (103) durch die Abflussleitung (207),
l. Messen des Volumens (Vm2) des in Schritt k.) abgesaugten gefilterten Flüssigkeitsvolumens der gefilterten Flüssigkeit in einer Messeinheit (406) und Empfangen eines ein zweites Messergebnis repräsentierendes zweiten Messsignal (SM2) von der Messeinheit (404) in der Steuerungseinheit (410),
m. Bilden eines zweiten Durchlässigkeitsquotienten aus dem Volumen (Vm2) des in Schritt k.) abgesaugten gefilterten Flüssigkeitsvolumen zu dem Volumen (V0) des in Schritt i.) ausgegebenen vorbestimmten Flüssigkeitsvolumen in der Steuerungseinheit (410),
n. Vergleichen des in Schritt m.) gebildeten zweiten Durchlässigkeitsquotienten mit einem zweiten vorbestimmten Durchlässigkeitsgrenzwert durch die Steuerungseinheit (410), wobei der zweite Durchlässigkeitsgrenzwert vorzugsweise
- dem ersten vorbestimmten Durchlässigkeitsgrenzwert entspricht, oder
- größer als der erste vorbestimmte Durchlässigkeitsgrenzwert ist; und
wobei die Steuerungseinheit (410) ausgebildet ist, nach der zweiten Bestimmung einer Durchlässigkeit (302) des Filterkorbs (101) die Reinigungseinheit (412) zur Durchführung eines zweiten Reinigungsprozesses des Filterkorbs (101) anzusteuern (304), falls der in Schritt m.) gebildete Durchlässigkeitsquotient den zweiten vorbestimmten Durchlässigkeitsgrenzwert unterschreitet.

13. Durchlasstestvorrichtung nach einem der Ansprüche 11 bis 12, aufweisend einen Frischwasseranschluss (428) zum Zuführen von Frischwasser zu der Durchlasstestvorrichtung (400) und einen Druckluftanschluss (426) zum Zuführen von Druckluft zu der Durchlasstestvorrichtung (400), und wobei
- die Steuerungseinheit (410) ausgebildet ist, die Reinigungseinheit (412) nach Bestimmen der Durchlässigkeit des Filterkorbs (101) zur Durchführung eines mechanischen Reinigungsprozesses anzusteuern, falls der in Schritt f.) gebildete erste Durchlässigkeitsquotient einen ersten Reinigungsgrenzwert, der niedriger ist als der erste Durchlässigkeitsgrenzwert, unterschreitet, und wobei
- die Steuerungseinheit (410) ausgebildet ist, die Reinigungseinheit (412) zur Durchführung eines chemischen Reinigungsprozesses anzusteuern, falls der in Schritt f.) gebildete erste Durchlässigkeitsquotient den ersten Reinigungsgrenzwert überschreitet, jedoch niedriger ist als der erste Durchlässigkeitsgrenzwert.

14. Durchlasstestvorrichtung nach Anspruch 13, wobei
- die Steuerungseinheit (410) ausgebildet ist, die Reinigungseinheit (412) nach dem zweiten Bestimmen einer Durchlässigkeit des Filterkorbs (101) zur Durchführung eines mechanischen zweiten Reinigungsprozesses anzusteuern, falls der in Schritt m.) gebildete zweite Durchlässigkeitsquotient einen zweiten Reinigungsgrenzwert, der kleiner ist als der zweite Durchlässigkeitsgrenzwert und größer ist als der erste Reinigungsgrenzwert, unterschreitet, und wobei
- die Steuerungseinheit (410) ausgebildet ist, die Reinigungseinheit (412) zur Durchführung eines chemischen zweiten Reinigungsprozesses anzusteuern, falls der in Schritt m.) gebildete zweite Durchlässigkeitsquotient den zweiten Reinigungsgrenzwert überschreitet, jedoch niedriger ist als der zweite Durchlässigkeitsgrenzwert.

15. Durchlasstestvorrichtung nach einem der Ansprüche 11 bis 14, wobei die Flüssigkeitsdosiereinheit (404) einen Messzylinder (440) aufweist, in welchen das vorbestimmte Flüssigkeitsvolumen (V0) aufgenommen wird,
wobei das abgesaugte gefilterte Flüssigkeitsvolumen (Vm, Vm2) in den Messzylinder (404) aufnehmbar ist,
wobei der Messzylinder (404) mit der Absaugeinheit (402) verbunden ist, um einen Unterdruck an diesem anzulegen,
und wobei der Messzylinder (404) einen berührungslosen Abstandssensor (460) aufweist zum Erfassen einer Füllstandshöhe in dem Messzylinder (404).

## Claims

1. A method (300) for automated cleaning of a filter basket (101) in a bioreactor (100), wherein the filter basket (101) is in fluid communication with a liquid tank (102) on the outlet side, and wherein the filter basket (101) is defined by filtering walls (201, 202) on a bottom side and on lateral sides, comprising
- determining (301) a permeability of the filter basket (101), comprising the steps of:
a. controlling (310) a suction unit (402) by means of an electronic control unit (410) to suction a residual liquid (208) from a liquid tank (103) through a drain line (207),
b. subsequently controlling (314) a liquid metering unit (404) by means of the electronic control unit (410) to dispense a liquid having a predetermined liquid volume (V0) into the filter basket (101) through a flushing line (203),
c. terminating (316) dispensing of the fluid at a filter start time (tF),
d. controlling (320), after a duration of a predetermined filter time interval (tZ), which starts at the filter start time (tF), has elapsed, the suction unit (402) by means of the control unit (410) to empty the liquid tank (103) by suctioning a filtered liquid volume (209) from the liquid tank (103) through the drain line (207),
e. measuring (324) the volume (Vm) of the filtered liquid (209) suctioned in step d) in a measuring unit (406) and sending (326) a first measurement signal (SM1) representing a first measurement result from the measuring unit (406) to the control unit (410),
f. determining (328) a first permeability quotient (QD1) from the volume (Vm) of the filtered liquid suctioned in step d) to the volume (V0) of the predetermined liquid volume dispensed in step b) in the control unit (410), and
g. comparing (330) the first permeability quotient (QD1) with a first predetermined permeability threshold (DG1) by the control unit (410); and
- controlling (302) a cleaning unit (412) to perform a cleaning process of the filter basket (101) if the first permeability quotient (QD1) is below the first permeability threshold (DG1).

2. The method according to claim 1,
wherein, after completion of the cleaning process, a second determination of a permeability (303) of the filter basket (101) is performed, comprising the steps of:
h. controlling (340) the suction unit (402) by means of the electronic control unit (410) to suction a residual liquid (208) from the liquid tank (103) through the drain line (207),
i. controlling (344) the liquid metering unit (404) by means of the electronic control unit (410) to dispense a liquid having a predetermined liquid volume (V0) into the filter basket (101) through the flushing line (203),
j. terminating (346) dispensing of the fluid at a filter start time (tF),
k. controlling (350), after a duration of a predetermined filter time interval (tZ), which starts from the filter start time, has elapsed, the suction unit (402) by means of the control unit (410) to empty the liquid tank (103) by suctioning a filtered liquid volume (209) from the liquid tank (103) through the drain line (207),
l. measuring (354) the volume (Vm2) of the filtered liquid volume of the filtered liquid (209) suctioned in step k) in the measuring unit (406) and sending a second measurement signal (SM2) representing a second measurement result from the measuring unit (406) to the control unit (410),
m. determining (358) a second permeability quotient (QD2) from the volume (Vm2) of the filtered liquid volume suctioned in step k) to the volume (V0) of the predetermined volume of liquid dispensed in step i) in the control unit (410), and
n. comparing (360) the second permeability quotient (QD2) determined in step m) with a second predetermined permeability threshold (DG2) by the control unit (410), wherein the second permeability threshold preferably
- corresponds to the first predetermined permeability threshold (DG1), or
- is greater than the first predetermined permeability limit (DG1); and
- the method further comprising: controlling (304) the cleaning unit (412) to perform a cleaning process of the filter basket (101) if the second permeability quotient (QD2) formed in step m) is below the second permeability threshold (DG2).

3. The method according to any one of the preceding claims, wherein
- the cleaning process is a mechanical cleaning process if the first permeability quotient determined in step f) is below a first cleaning threshold which is lower than the first permeability threshold; and
- wherein the cleaning process is a chemical cleaning process if the first permeability quotient determined in step f) is above the first cleaning threshold but is lower than the first permeability threshold.

4. The method according to claim 2 and 3, wherein the cleaning unit
- performs a mechanical second cleaning process if the second permeability quotient determined in step m) is below a second cleaning threshold which is lower than the second permeability threshold and higher than the first cleaning threshold; and
- performs a chemical second cleaning process if the second permeability quotient is above the second cleaning threshold but is lower than the second permeability threshold.

5. The method according to any of the preceding claims, wherein the bottom side (201) of the filter basket (101) has a total bottom area size and the dispensed predetermined liquid volume (V0) is metered according to the product of the total bottom area size and a filling height of 0.25 cm to 2.5 cm, preferably 0.25 cm to 1 cm, in particular 0.5 cm in the filter basket (101).

6. The method according to claim 2, wherein the liquid metering unit (404) in step i) is controlled by means of the electronic control unit (410) in such a way that the dispensing of the liquid with the predetermined liquid volume (V0) takes place with a dispensing rate which is the quotient of the volume measured in step e) to the predetermined filter time interval according to step d) is not exceeded.

7. The method according to any one of the preceding claims, wherein during the suctioning in step a), d), h) and/or k), it is monitored by means of a suction detection unit whether liquid or air is being suctioned, and wherein between step a) and b) the flushing line (203), via which the predetermined liquid volume (V0) is metered, is completely filled with liquid.

8. The method according to one of the preceding claims, **characterized in that** the suction unit in step a) is controlled for the duration of a predetermined first suction period, and preferably the suction unit is controlled in step d) for the duration of the predetermined first suction period.

9. The method according to one of the preceding claims, **characterized in that** the suction unit (402) in step a) is continued to be controlled for the duration of a predetermined first suction period from the time at which no more pure liquid but a liquid-air mixture is suctioned, and **in that** the suction unit (402) in step e) is continued to be controlled for the duration of the predetermined first suction period from the time at which no more pure liquid but a liquid-air mixture is suctioned.

10. The method according to any one of the preceding claims, wherein the liquid metering unit (404) comprises a measuring cylinder (440), and the method comprises the step of:
- receiving the predetermined volume of liquid (V0) in the measuring cylinder (440),
before the predetermined volume of liquid is dispensed into the filter basket (101), further comprising the step of:
- collecting the suctioned filtered liquid volume in the measuring cylinder (440),
before measuring the volume (Vm, Vm1) of the suctioned filtered liquid volume, wherein for receiving the suctioned filtered liquid volume, a vacuum is applied to the measuring cylinder (440) to suction the filtered liquid volume and thus receive it in the measuring cylinder (440).

11. A permeability test device (400) for automated cleaning of a filter basket (101) in a bioreactor (100), wherein the filter basket (101) is in fluid communication with a liquid tank (103) on the outlet side and is defined by filtering walls (201, 202) on the bottom side and on lateral sides,
the permeability test device (400) comprising an electronic control unit (410), which is in signal communication with a suction unit (402), a liquid metering unit (404), a measuring unit (406) and preferably a cleaning unit (412), wherein the suction unit (402) is in fluid connection with the measuring unit (406), and wherein the control unit (410) is adapted to control the suction unit (402), the liquid metering unit (404) and the measuring unit (406) for determining (301) a permeability of the filter basket (103), **characterized in that**
the control unit (410) is configured to
a. controlling the suction unit (402) to suction a residual liquid (208) from the liquid tank (103) through a drain line (207),
b. subsequently controlling the liquid metering unit (404) to dispense a liquid having a predetermined liquid volume (V0) into the filter basket (103) through a flushing line (203),
c. terminating dispensing the liquid at a filter start time,
d. controlling, after a duration of a predetermined filter time interval, which starts from the filter start time, has elapsed, the suction unit (402) to empty the liquid tank (103) by suctioning a filtered liquid volume (209) from the liquid tank (103) through the drain line (207),
e. measuring the volume (Vm) of the filtered liquid (209) suctioned in step d) in a measuring unit (406) and receiving a first measurement signal (SM1) representing a first measurement result from the measuring unit (406),
f. determining a first permeability quotient from the volume (Vm) of the filtered liquid volume suctioned in step d) to the volume (V0) of the predetermined liquid volume dispensed in step b) in the control unit (410), and
g. comparing the first permeability quotient with a first predetermined permeability threshold by the control unit (410);
and
wherein the control unit (410) is adapted to control (302) the cleaning unit (412) for cleaning the filter basket (103) if the first permeability quotient determined in step f) is below the first permeability threshold.

12. The permeability test device according to claim 11, wherein the control unit (410) is adapted to control the suction unit (402), the liquid metering unit (404) and the measuring unit (406) for a second determination of a permeability (303) of the filter basket (101) after completion of the cleaning process, comprising the steps:
h. controlling the suction unit (402) to suction a residual liquid from the liquid tank (103) through the drain line (207),
i. controlling the liquid metering unit (404) to dispense a liquid having a predetermined liquid volume (V0) into the filter basket (101) through the flushing line (203),
j. terminating dispensing of the liquid at a filter start time,
k. controlling, after a duration of a predetermined filter time interval, which starts from the filter start time, has elapsed, the suction unit (402) by means of the control unit (410) to empty the liquid tank (103) by suctioning a filtered liquid volume (209) from the liquid tank (103) through the drain line (207),
l. measuring the volume (Vm2) of the filtered liquid volume of the filtered liquid (209) suctioned in step k) in a measuring unit (406) and receiving a second measurement signal (SM2) representing a second measurement result from the measuring unit (404) in the control unit (410),
m. determining a second permeability ratio from the volume (Vm2) of the filtered liquid volume extracted in step k. ) extracted filtered liquid volume to the volume (V0) of the predetermined liquid volume dispensed in step i) in the control unit (410),
n. comparing the second permeability quotient determined in step m) with a second predetermined permeability threshold by the control unit (410), wherein the second permeability threshold preferably
- corresponds to the first predetermined permeability threshold, or
- is above than the first predetermined permeability threshold; and
wherein the control unit (410) is adapted to control (304) the cleaning unit (412) to perform a second cleaning process of the filter basket (101) after the second determination of a permeability (302) of the filter basket (101), if the permeability quotient determined in step m) is below the second predetermined permeability threshold.

13. The permeability test device according to any one of claims 11 to 12, comprising a fresh water port (428) for supplying fresh water to the permeability test device (400) and a compressed air port (426) for supplying compressed air to the permeability test device (400), and wherein
- the control unit (410) is adapted to control the cleaning unit (412) after determining the permeability of the filter basket (101) to perform a mechanical cleaning process if the first permeability quotient determined in step f) is below a first cleaning threshold which is lower than the first permeability threshold, and wherein
- the control unit (410) is adapted to control the cleaning unit (412) to perform a chemical cleaning process if the first permeability quotient determined in step f) is above the first cleaning threshold but is lower than the first permeability threshold.

14. The permeability test device according to claim 13, wherein
- the control unit (410) is adapted to control the cleaning unit (412) after the second determination of a permeability of the filter basket (101) for performing a mechanical second cleaning process if the second permeability quotient formed in step m) is below a second cleaning threshold which is smaller than the second permeability threshold and larger than the first cleaning threshold, and wherein
- the control unit (410) is adapted to control the cleaning unit (412) to perform a chemical second cleaning process if the second permeability quotient determined in step m) is above the second cleaning threshold but is lower than the second permeability threshold.

15. The permeability test device according to any one of claims 11 to 14, wherein the liquid metering unit (404) comprises a measuring cylinder (440) into which the predetermined volume of liquid (V0) is received, wherein the extracted filtered liquid volume (Vm, Vm2) is receivable in the measuring cylinder (404), wherein the measuring cylinder (404) is connected to the suction unit (402) to apply a vacuum thereto, and wherein the measuring cylinder (404) comprises a non-contact distance sensor (460) for detecting a fill level in the measuring cylinder (404).

## Revendications

1. Procédé (300) de nettoyage automatisé d'un panier filtrant (101) dans un bioréacteur (100), le panier filtrant (101) étant, du côté de la sortie, en communication fluidique avec un réservoir de liquide (102) et le panier filtrant (101) étant délimité du côté du fond et latéralement par des parois filtrantes (201, 202), comprenant
- déterminer (301) une perméabilité du panier filtrant (101), comprenant les étapes consistant à :
a. commander (310) une unité d'aspiration (402) au moyen d'une unité de commande électronique (410) pour aspirer un liquide résiduel (208) depuis le réservoir de liquide (103) à travers une conduite d'évacuation (207),
b. commander ensuite (314) une unité de dosage de liquide (404) au moyen de l'unité de commande électronique (410) pour délivrer un liquide ayant un volume de liquide prédéterminé (V0) dans le panier filtrant (101) à travers une conduite de rinçage (203),
c. arrêter (316) la distribution du liquide à un instant de démarrage du filtrage (tF),
d. commander (320), après l'écoulement d'une durée d'un intervalle de temps de filtrage prédéterminé (tZ) qui commence à partir de l'instant de démarrage du filtrage (tF), l'unité d'aspiration (402) au moyen de l'unité de commande (410) pour vider le réservoir de liquide (103) par aspiration d'un volume de liquide filtré (209) depuis le réservoir de liquide (103) à travers la conduite d'évacuation (207),
e. mesurer (324) le volume (Vm) du volume de liquide filtré aspiré à l'étape d), du liquide filtré (209), dans une unité de mesure (406) et envoyer (326) un premier signal de mesure (SM1) représentant un premier résultat de mesure de l'unité de mesure (406) à l'unité de commande (410),
f. former (328) un premier quotient de perméabilité (QD1) à partir du volume (Vm) du volume de liquide filtré aspiré à l'étape d) sur le volume (V0) du volume de liquide prédéterminé délivré à l'étape b) dans l'unité de commande (410), et
g. comparer (330) le premier quotient de perméabilité (QD1) à une première valeur limite de perméabilité prédéterminée (DG1) par l'unité de commande (410) ; et
- commander (302) une unité de nettoyage (412) pour l'exécution d'un processus de nettoyage du panier filtrant (101) dans le cas où le premier quotient de perméabilité (QD1) devient inférieur à la première valeur limite de perméabilité (DG1).

2. Procédé selon la revendication 1,
une deuxième détermination d'une perméabilité (303) du panier filtrant (101) étant effectuée après l'achèvement du processus de nettoyage, comprenant les étapes consistant à :
h. commander (340) l'unité d'aspiration (402) au moyen de l'unité de commande électronique (410) pour aspirer un liquide résiduel (208) depuis le réservoir de liquide (103) à travers la conduite d'évacuation (207),
i. commander (344) l'unité de dosage de liquide (404) au moyen de l'unité de commande électronique (410) pour délivrer un liquide ayant un volume de liquide prédéterminé (V0) dans le panier filtrant (103) à travers la conduite de rinçage (203),
j. arrêter (346) la distribution du liquide à un instant de démarrage du filtrage (tF),
k. commander (350), après l'écoulement d'une durée d'un intervalle de temps de filtrage prédéterminé (tZ) qui commence à partir de l'instant de démarrage de filtrage, l'unité d'aspiration (402) au moyen de l'unité de commande (410) pour vider le réservoir de liquide (103) par aspiration d'un volume de liquide filtré (209) depuis le réservoir de liquide (103) à travers la conduite d'évacuation (207),
l. mesurer (354) le volume (Vm2) du volume de liquide filtré aspiré à l'étape k.) du liquide filtré (209) dans l'unité de mesure (406) et envoyer un deuxième signal de mesure (SM2) représentant un deuxième résultat de mesure de l'unité de mesure (406) à l'unité de commande (410),
m. former (358) un deuxième quotient de perméabilité (QD2) à partir du volume (Vm2) du volume de liquide filtré aspiré à l'étape k.) sur le volume (V0) du volume de liquide prédéterminé délivré à l'étape i.) dans l'unité de commande (410), et
n. comparer (360) le deuxième quotient de perméabilité (QD2) formé à l'étape m.) avec une deuxième valeur limite de perméabilité (DG2) prédéterminée par l'unité de commande (410), la deuxième valeur limite de perméabilité, de préférence,
- correspondant à la première valeur limite de perméabilité prédéterminée (DG1), ou
- étant supérieure à la première valeur limite de perméabilité prédéterminée (DG1) ; et
- le procédé comprenant en outre : commander (304) l'unité de nettoyage (412) pour exécuter un processus de nettoyage du panier filtrant (101) dans le cas où le deuxième quotient de perméabilité (QD2) formé à l'étape m.) devient inférieur à la deuxième valeur limite de perméabilité (DG2).

3. Procédé selon l'une quelconque des revendications précédentes,
- le processus de nettoyage étant un processus de nettoyage mécanique dans le cas où premier quotient de perméabilité formé à l'étape f.) devient inférieur à une première valeur limite de nettoyage, laquelle est inférieure à la première valeur limite de perméabilité ; et
- le processus de nettoyage étant un processus de nettoyage chimique dans le cas où le premier quotient de perméabilité formé à l'étape f.) devient supérieur à la première valeur limite de nettoyage, mais est inférieur à la première valeur limite de perméabilité.

4. Procédé selon les revendications 2 et 3, l'unité de nettoyage
- effectuant un deuxième processus de nettoyage mécanique dans le cas où le deuxième quotient de perméabilité formé à l'étape m.) devient inférieur à une deuxième valeur limite de nettoyage, laquelle est inférieure à la deuxième valeur limite de perméabilité et supérieure à la première valeur limite de nettoyage ; et
- effectuant un deuxième processus de nettoyage chimique dans le cas où le deuxième quotient de perméabilité devient supérieur à la deuxième valeur limite de nettoyage mais est inférieur à la deuxième valeur limite de perméabilité.

5. Procédé selon l'une quelconque des revendications précédentes, le côté de fond (201) du panier filtrant (101) présentant une taille de surface de fond totale et le volume de liquide prédéterminé (V0) distribué étant dimensionné en fonction du produit de la taille de surface de fond totale et d'une hauteur de remplissage de 0,25 cm à 2,5 cm, de préférence de 0,25 cm à 1 cm, en particulier de 0,5 cm dans le panier filtrant (101).

6. Procédé selon la revendication 2, l'unité de dosage de liquide (404) étant commandée à l'étape i.) au moyen de l'unité de commande électronique (410) de sorte que la distribution du liquide ayant le volume de liquide prédéterminé (V0) est effectuée à un débit de distribution qui n'excède pas le quotient du volume (Vm) mesuré à l'étape e.) sur l'intervalle de temps de filtrage prédéterminé selon l'étape d.).

7. Procédé selon l'une quelconque des revendications précédentes, une surveillance étant effectuée pendant l'aspiration à l'étape a.), d.), h.) et/ou k.) au moyen d'une unité de détection d'aspiration afin de vérifier si du liquide ou de l'air est aspiré et, entre l'étape a) et l'étape b), la conduite de rinçage (203), par laquelle le volume de liquide prédéterminé (V0) est ajouté, étant entièrement remplie de liquide.

8. Procédé selon l'une quelconque des revendications précédentes, **caractérisé en ce que** l'unité d'aspiration est commandée à l'étape a) pendant la durée d'une première période d'aspiration prédéterminée et, de préférence, l'unité d'aspiration est commandée à l'étape d) pendant la durée de la première période d'aspiration prédéterminée.

9. Procédé selon l'une quelconque des revendications précédentes, **caractérisé en ce que**, à l'étape a), l'unité d'aspiration (402) est encore commandée pendant la durée d'une première période d'aspiration prédéterminée à partir de l'instant où ce n'est plus un liquide pur qui est aspiré, mais un mélange liquide-air, et **en ce que**, à l'étape e), l'unité d'aspiration (402) est encore commandée pendant la durée de la première période d'aspiration prédéterminée à partir de l'instant où ce n'est plus un liquide pur qui est aspiré, mais un mélange liquide-air.

10. Procédé selon l'une quelconque des revendications précédentes, l'unité de dosage de liquide (404) possédant un cylindre de mesure (440) et le procédé comprenant l'étape consistant à :
- recevoir le volume de liquide prédéterminé (V0) dans le cylindre de mesure (440), avant que le volume prédéterminé de liquide ne soit distribué dans le panier filtrant (101),
comprenant en outre l'étape consistant à :
- recevoir le volume de liquide filtré aspiré dans le cylindre de mesure (440),
avant de mesurer le volume (Vm, Vm1) du volume de liquide filtré aspiré,
en vue de recevoir le volume de liquide filtré aspiré, une dépression étant appliquée au cylindre de mesure (440) afin d'aspirer le volume de liquide filtré et de le recevoir ainsi dans le cylindre de mesure (440).

11. Dispositif de test de perméabilité (400) pour le nettoyage automatisé d'un panier filtrant (101) dans un bioréacteur (100), le panier filtrant (101) étant, du côté de la sortie, en communication fluidique avec un réservoir de liquide (103) et étant limité par des parois filtrantes (201, 202) du côté du fond et latéralement,
le dispositif de test de passage (400) comprenant une unité de commande électronique (410) qui est en liaison de signaux avec une unité d'aspiration (402), une unité de dosage de liquide (404), une unité de mesure (406) et de préférence une unité de nettoyage (412), l'unité d'aspiration (402) étant en communication fluidique avec l'unité de mesure (406), et l'unité de commande (410) étant configurée pour commander l'unité d'aspiration (402), l'unité de dosage de liquide (404) et l'unité de mesure (406) afin de déterminer (301) une perméabilité du panier filtrant (103), **caractérisé en ce que**
l'unité de commande (410) est configurée pour
a. commander l'unité d'aspiration (402) pour aspirer un liquide résiduel (208) depuis le réservoir de liquide (103) à travers une conduite d'évacuation (207),
b. commander ensuite l'unité de dosage de liquide (404) pour délivrer un liquide ayant un volume de liquide prédéterminé (V0) dans le panier filtrant (103) à travers une conduite de rinçage (203),
c. arrêter la distribution du liquide à un instant de démarrage du filtrage,
d. commander, après l'écoulement d'une durée d'un intervalle de temps de filtrage prédéterminé qui commence à partir de l'instant de démarrage de filtrage, l'unité d'aspiration (402) pour vider le réservoir de liquide (103) par aspiration d'un volume de liquide filtré (209) depuis le réservoir de liquide (103) à travers la conduite d'évacuation (207),
e. mesurer le volume (Vm) du volume de liquide filtré aspiré à l'étape d), du liquide filtré (209), dans une unité de mesure (406) et recevoir un premier signal de mesure (SM1) de l'unité de mesure (406) représentant un premier résultat de mesure,
f. former, dans l'unité de commande (410), un premier quotient de perméabilité à partir du volume (Vm) du volume de liquide filtré aspiré à l'étape d) sur le volume (V0) du volume de liquide prédéterminé délivré à l'étape b), et
g. comparer le premier quotient de perméabilité à une première valeur limite de perméabilité prédéterminée par l'unité de commande (410) ;
et
l'unité de commande (410) étant configurée pour commander (302) l'unité de nettoyage (412) pour le nettoyage du panier filtrant (103) dans le cas où le premier quotient de perméabilité formé à l'étape f.) devient inférieur à la première valeur limite de perméabilité.

12. Dispositif de test de perméabilité selon la revendication 11, l'unité de commande (410) étant configurée pour, après la fin du processus de nettoyage, commander l'unité d'aspiration (402), l'unité de dosage de liquide (404) et l'unité de mesure (406) pour une deuxième détermination d'une perméabilité (303) du panier filtrant (101), comprenant les étapes consistant à :
h. commander l'unité d'aspiration (402) pour aspirer un liquide résiduel depuis le réservoir de liquide (103) à travers la conduite d'évacuation (207),
i. commander l'unité de dosage de liquide (404) pour délivrer un liquide ayant un volume de liquide prédéterminé (V0) dans le panier filtrant (101) à travers la conduite de rinçage (203),
j. arrêter la distribution du liquide à un instant de démarrage du filtrage,
k. commander, après l'écoulement d'une durée d'un intervalle de temps de filtrage prédéterminé qui commence à partir de l'instant de démarrage de filtrage, l'unité d'aspiration (402) au moyen de l'unité de commande (410) pour vider le réservoir de liquide (103) par aspiration d'un volume de liquide filtré (209) depuis le réservoir de liquide (103) à travers la conduite d'évacuation (207),
l. mesurer le volume (Vm2) du volume de liquide filtré aspiré à l'étape k.), du liquide filtré, dans une unité de mesure (406) et recevoir un deuxième signal de mesure (SM2) représentant un deuxième résultat de mesure depuis l'unité de mesure (404) dans l'unité de commande (410),
m. former, dans l'unité de commande (410), un deuxième quotient de perméabilité à partir du volume (Vm2) du volume de liquide filtré aspiré à l'étape k.) sur le volume (V0) du volume de liquide prédéterminé délivré à l'étape i.),
n. comparer, par l'unité de commande (410), le deuxième quotient de perméabilité formé à l'étape m.) avec une deuxième valeur limite de perméabilité prédéterminée, la deuxième valeur limite de perméabilité, de préférence
- correspondant à la première valeur limite de perméabilité prédéterminée, ou
- étant supérieure à la première limite de perméabilité prédéterminée ; et
l'unité de commande (410) étant configurée pour, après la deuxième détermination d'une perméabilité (302) du panier filtrant (101), commander (304) l'unité de nettoyage (412) pour exécuter un deuxième processus de nettoyage du panier filtrant (101) dans le cas où le quotient de perméabilité formé à l'étape m.) devient inférieur à la deuxième valeur limite de perméabilité prédéterminée.

13. Dispositif de test de perméabilité selon l'une quelconque des revendications 11 à 12, possédant un raccord d'eau douce (428) destiné à acheminer de l'eau douce au dispositif de test de perméabilité (400) et un raccord d'air comprimé (426) destiné à acheminer de l'air comprimé au dispositif de test de perméabilité (400), et
- l'unité de commande (410) étant configurée pour commander l'unité de nettoyage (412) après détermination de la perméabilité du panier filtrant (101) en vue d'exécuter un processus de nettoyage mécanique dans le cas où le premier quotient de perméabilité formé à l'étape f.) devient inférieur à une première valeur limite de nettoyage qui est inférieure à la première valeur limite de perméabilité, et
- l'unité de commande (410) étant configurée pour commander l'unité de nettoyage (412) en vue d'exécuter un processus de nettoyage chimique dans le cas où le premier quotient de perméabilité formé à l'étape f.) devient supérieur à la première valeur limite de nettoyage, mais est inférieur à la première valeur limite de perméabilité.

14. Dispositif de test de perméabilité selon la revendication 13,
- l'unité de commande (410) étant configurée pour commander l'unité de nettoyage (412) après la deuxième détermination d'une perméabilité du panier filtrant (101) en vue d'exécuter un deuxième processus de nettoyage mécanique dans le cas où le deuxième quotient de perméabilité formé à l'étape m.) devient inférieur à une deuxième valeur limite de nettoyage qui est inférieure à la deuxième valeur limite de perméabilité et supérieure à la première valeur limite de nettoyage, et
- l'unité de commande (410) étant configurée pour commander l'unité de nettoyage (412) en vue d'exécuter un deuxième processus de nettoyage chimique dans le cas où le deuxième quotient de perméabilité formé à l'étape m.) devient supérieur à la deuxième valeur limite de nettoyage, mais est inférieur à la deuxième valeur limite de perméabilité.

15. Dispositif de test de perméabilité selon l'une quelconque des revendications 11 à 14, l'unité de dosage de liquide (404) possédant un cylindre de mesure (440) dans lequel est reçu le volume de liquide prédéterminé (V0),
le volume de liquide filtré aspiré (Vm, Vm2) pouvant être reçu dans le cylindre de mesure (404),
le cylindre de mesure (404) étant relié à l'unité d'aspiration (402) afin d'appliquer une dépression à celui-ci,
et le cylindre de mesure (404) possédant un capteur de distance sans contact (460) pour détecter un niveau de remplissage dans le cylindre de mesure (404).
